# FASCICULE DE BREVET EUROPEEN

(11) **EP 2 384 403 B1**
(45) Date de publication et mention de la délivrance du brevet: **14.08.2013**
(21) Numéro de dépôt: 10707573.1
(22) Date de dépôt: 22.01.2010
(51) Int. Cl.: F16D 21/00, F16D 23/12

(54) **MECANISME A DOUBLE EMBRAYAGE COMPORTANT UN DISPOSITIF DE COMMANDE A DOUBLE FOURCHETTE**
DOPPELKUPPLUNG MIT DOPPELGABELBETÄTIGUNG
DUAL CLUTCH WITH A DOUBLE FORK ACTUATOR

(30) Priorité: 30.01.2009 FR 0950590
(43) Date de publication de la demande: 09.11.2011
(73) Titulaire: Valeo Embrayages, 80009 Amiens (FR)
(72) Inventeur: COMMEINE, Emmanuel, F-80480 Saleux (FR)
(86) Numéro de dépôt international: PCT/FR2010/050098
(87) Numéro de publication internationale: WO 2010/086540

(56) Documents cités:
- EP-A- 1 508 715
- DE-A1- 10 313 435
- DE-A1-102004 007 161
- FR-A- 2 859 773

## Description

La présente invention concerne un mécanisme à double embrayage comportant un dispositif de commande à double fourchette.

La présente invention concerne plus particulièrement un mécanisme à double embrayage selon le préambule de la revendication 1.

Un tel mécanisme à double embrayage est notamment utilisé pour coupler alternativement l'arbre d'un moteur du véhicule avec deux arbres coaxiaux d'entrée d'une boîte de vitesses, dite boîte de vitesses à double embrayage.

Le mécanisme à double embrayage, encore appelé double embrayage, permet de changer de rapport de vitesses tout en maintenant la transmission d'un couple moteur aux roues du véhicule.

Pour ce faire, le mécanisme à double embrayage comprend généralement un premier embrayage et un deuxième embrayage respectivement associés à des rapports de vitesses pairs et impairs.

Lors d'un changement de rapport de vitesses, le premier embrayage est débrayé alors que le second embrayage est embrayé si bien que le couple moteur est transféré progressivement du premier embrayage au deuxième embrayage.

Ainsi, la somme des couples transmis par les premier et deuxième embrayages est toujours sensiblement égale au couple moteur.

Le mécanisme à double embrayage comporte encore un carter fixe délimitant un volume dans lequel sont logés les deux embrayages de passage de rapports de parités différentes.

Chaque embrayage du mécanisme comporte un diaphragme destiné à coopérer avec un plateau de pression solidaire en rotation du couvercle et de l'arbre du moteur. Chaque diaphragme est déplaçable, au moyen d'une butée de commande correspondante, entre au moins une première position et une deuxième position.

Selon le type de l'embrayage, ladite première position du diaphragme correspond à un couplage ou découplage des arbres de moteur et de boîte de vitesses et ladite deuxième position du diaphragme correspond à un découplage ou couplage de ces arbres de moteur et de boîte de vitesses.

Chaque plateau de pression, sollicité par le diaphragme correspondant, est destiné à enserrer un disque de friction entre ce plateau de pression et un plateau de réaction correspondant.

De plus, chaque disque de friction est lié en rotation à un arbre correspondant de boîte de vitesses et chaque plateau de pression est solidaire en rotation d'un couvercle, généralement lié à l'arbre moteur par des moyens de liaison tels qu'un volant flexible ou un double volant amortisseur.

Par le serrage d'un disque de friction entre les plateaux de pression et de réaction correspondants, on réalise la transmission d'un couple entre l'arbre moteur et l'arbre de boîte de vitesses associé.

On connaît déjà dans l'état de la technique de nombreux exemples de mécanisme à double embrayage de ce type.

Un tel mécanisme est équipé d'un dispositif de commande associé comportant principalement des moyens d'actionnement aptes à solliciter sélectivement chacune des première et deuxième fourchettes destinées à actionner entre deux positions extrêmes des première et deuxième butées de commande commandant respectivement le déplacement de chacun des diaphragmes du premier et du deuxième embrayages.

Le document WO-A1-2005/028902 décrit un exemple de réalisation d'un tel mécanisme à double embrayage équipé d'un dispositif de commande associé comportant deux fourchettes pour l'actionnement d'une double butée de commande.

Dans ce document, les fourchettes du dispositif de commande sont articulées chacune autour d'une liaison à rotule respectivement fixée sur le carter du mécanisme et agencée radialement au plus près l'une de l'autre, c'est-à-dire agencée l'une en dessous de l'autre selon une orientation verticale, définie par convention comme orthogonale à l'orientation longitudinale qui est déterminée par l'axe X précité de rotation du mécanisme, lequel est également l'axe principal des butées de commande mues par les fourchettes.

Le document FR-A-2.838.169 décrit d'autres exemples de réalisation de dispositifs de commande notamment pour des mécanismes à double embrayage.

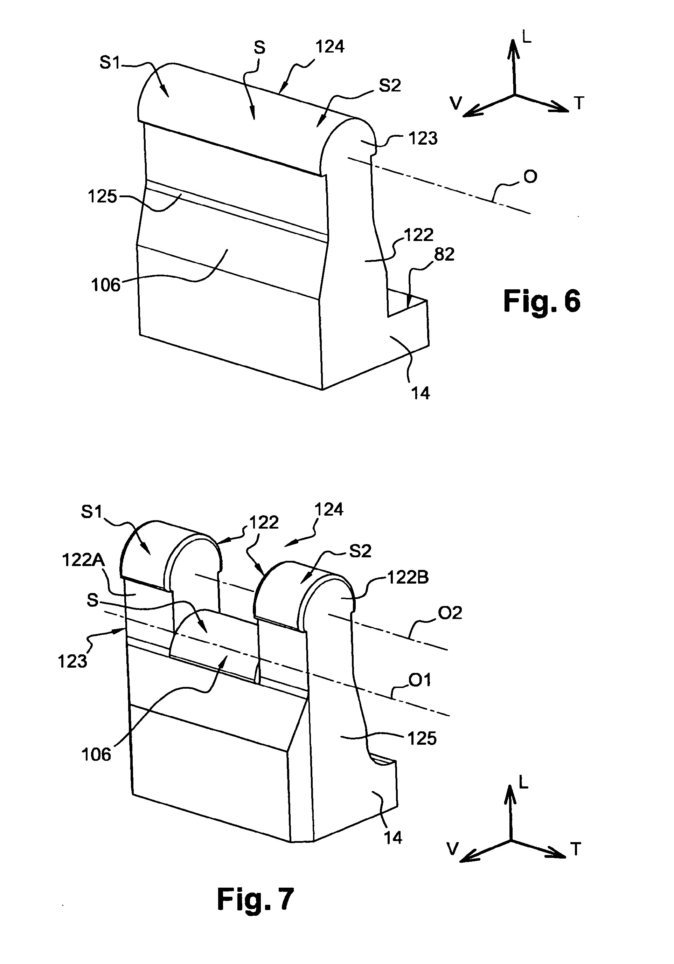

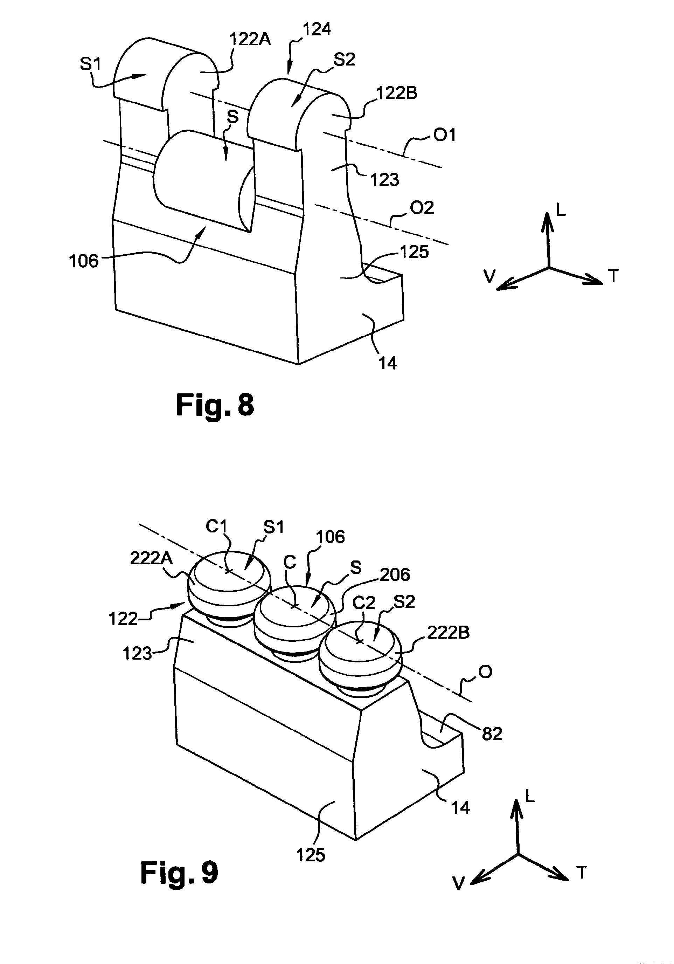

Les figures 7 et 8 illustrent un exemple de dispositif de commande pour un mécanisme à double embrayage comportant deux fourchettes formant respectivement des leviers du premier genre et qui sont agencés de part et d'autre de l'axe de rotation.

Les figures 9 à 11 illustrent un autre exemple de dispositif de commande pour un mécanisme à double embrayage comportant deux fourchettes formant respectivement des leviers du premier genre et qui sont agencées du même côté de l'axe de rotation et longitudinalement juxtaposées, c'est-à-dire disposées côte à côte de part et d'autre des moyens d'articulation.

Les différentes Un mécanisme et un dispositif de commande selon les préambules des revendications 1 et 12 sont connus de DE-A-103 13 435. solutions connues de l'état de la technique ne donnent cependant pas entière satisfaction, en particulier sur le plan de l'encombrement général.

En effet, l'agencement des moyens d'articulation est parfois difficile, notamment en raison de contraintes d'implantation, seul un espace réduit étant disponible pour loger les moyens d'actionnement, les fourchettes et les moyens d'articulation associés.

De surcroît, quelles que soient les contraintes particulières d'implantation d'une application donnée, les fourchettes doivent pouvoir actionner les butées de commande avec une course suffisante pour réaliser de manière satisfaisante les opérations d'embrayage ou de débrayage pour chacun des embrayages du mécanisme.

L'invention a notamment pour but de perfectionner le dispositif de commande d'un double embrayage tout en conservant pour chacun une structure simple, un encombrement particulièrement réduit et un fonctionnement efficace.

A cet effet, l'invention a pour objet un mécanisme à double embrayage du type décrit précédemment, caractérisé en ce que la première fourchette est logée à l'intérieur de la deuxième fourchette, lesdites première et deuxième fourchettes concentriques sont imbriquées l'une dans l'autre et sont, en position de repos, globalement coplanaires.

Grâce à un tel agencement de la surface interne d'articulation de la première fourchette entre les surfaces externes d'articulation de la deuxième fourchette, l'implantation des fourchettes et des moyens d'articulation associés peut être réalisée dans encombrement général plus réduit, tant radialement que selon la direction longitudinale.

Avantageusement, lesdits axes de rotation des fourchettes sont situés du même côté de l'axe X.

Par conséquent, les axes de rotation des fourchettes sont agencés de manière que, par rapport à un plan horizontal de référence passant par l'axe longitudinal X de rotation du mécanisme, le premier axe de rotation et le deuxième axe de rotation se trouvent du même côté du plan de référence ainsi défini, c'est-à-dire selon la direction verticale orthogonale audit plan, soit au dessus, soit au dessous.

Avantageusement, les moyens d'actionnement se trouvent du même côté dudit plan de référence, c'est à dire sont regroupés d'un même côté par rapport à l'axe X. notamment situés à l'opposé des axes de rotation lorsque les fourchettes sont formées par un levier du second genre.

Par comparaison avec l'état de la technique, l'agencement des moyens d'articulation des fourchettes présente un moindre encombrement selon la direction radiale et selon la direction longitudinale ou encore, à encombrement radial équivalent, une longueur de bras de levier supérieure pour au moins l'une des fourchettes.

Avantageusement, on simplifie également l'implantation des moyens d'articulation associés aux fourchettes par l'utilisation d'une pièce d'articulation commune aux fourchettes.

De préférence, la pièce commune d'articulation est liée au carter du mécanisme à partir de la face radiale avant ou fond duquel la pièce s'étend axialement ou longitudinalement vers l'avant par l'intermédiaire d'un pied présentant une longueur déterminée.

On réduit ainsi l'encombrement général du dispositif de commande comportant les fourchettes dont l'axe de rotation, de préférence un axe de pivotement commun, porté par une telle pièce commune est susceptible d'être disposé axialement plus en avant par rapport à la face du carter de manière que la course effectuée par la butée de commande actionnée par la fourchette soit maximale et obtenue pour une course correspondante des moyens d'actionnement qui soit minimale.

Avantageusement, le fonctionnement de chacune des première et deuxième fourchettes est totalement indépendant et les fourchettes sont susceptibles d'être déplacées sélectivement par des moyens d'actionnement, cela sans aucune interaction entre l'une et l'autre desdites fourchettes, les efforts appliqués à l'une n'étant en particulier pas transmis à l'autre et réciproquement.

Avantageusement, dans le dispositif de commande selon l'invention, les moyens d'articulation de la première fourchette et de la deuxième fourchette sont, de manière non limitative, respectivement constitués par un pivot et/ou par une rotule.

Avantageusement, les fourchettes et les moyens d'articulation selon l'invention permettent un gain d'encombrement dans les directions longitudinale (ou axiale) et radiale, tout en ayant un agencement des moyens d'actionnement associés d'un même côté de l'axe de rotation.

Selon d'autres caractéristiques de l'invention :
- les première et deuxième fourchettes constituent respectivement un levier d'un second genre de sorte que chaque fourchette constitue un levier dans lequel la force résistante qui lui est opposée, notamment par la butée associée, s'exerce sur une partie de d'actionnement de la fourchette qui est située entre l'axe de rotation et une partie de manoeuvre sur laquelle des moyens d'actionnement exercent une force motrice ;
- les premiers moyens d'articulation portant la surface interne d'articulation sont alignés longitudinalement avec les deuxièmes moyens d'articulation portant les surfaces externes d'articulation de manière que, par rapport à l'axe longitudinal de rotation, l'entraxe du premier axe de rotation de la première fourchette est égal à l'entraxe du deuxième axe de rotation de la deuxième fourchette ;
- les premiers moyens d'articulation portant la surface interne d'articulation sont, suivant la direction verticale qui est orthogonale à la direction longitudinale définie par l'axe de rotation, décalés par rapport aux deuxièmes moyens d'articulation portant les surfaces externes d'articulation de sorte que, par rapport audit l'axe longitudinal de rotation, l'entraxe du premier axe de rotation de la première fourchette est différent de l'entraxe du deuxième axe de rotation de la deuxième fourchette ;
- le premier axe de rotation de la première fourchette est coaxial au deuxième axe de rotation de la deuxième fourchette de sorte que les axes de rotation sont confondus et que les première et deuxième fourchettes présentent un axe de rotation commun ;
- le premier axe de rotation de la première fourchette et le deuxième axe de rotation de la deuxième fourchette sont décalés longitudinalement et/ou verticalement l'un par rapport à l'autre de sorte que les première et deuxième fourchettes présentent des axes de rotation parallèles ;
- les premiers moyens d'articulation sont constitués par au moins un pivot de sorte que le premier axe de rotation de la première fourchette est un axe de pivotement qui, d'orientation sensiblement transversale, est orthogonal à l'axe longitudinal de rotation ;
- les premiers moyens d'articulation sont constitués par au moins une rotule de sorte que la première fourchette est montée mobile en rotation autour d'un centre de rotation dont l'intersection avec un demi-plan transversal de référence, d'orientation verticale et orthogonal à l'axe longitudinal de rotation, détermine ledit premier axe de rotation de la première fourchette ;
- les deuxièmes moyens d'articulation sont constitués par au moins des premier et deuxième pivots de sorte que le deuxième axe de rotation de la deuxième fourchette est un axe de pivotement déterminé par lesdits pivots qui, d'orientation sensiblement transversale, est orthogonal à l'axe longitudinal de rotation ;
- les deuxièmes moyens d'articulation sont constitués par au moins des première et deuxième rotules de sorte que la deuxième fourchette est montée mobile en rotation autour d'un centre de rotation de chaque rotule, lesdits centres de rotation déterminant par intersection avec un demi-plan transversal de référence, d'orientation verticale et orthogonal à l'axe longitudinal de rotation, ledit deuxième axe de rotation de la deuxième fourchette ;
- les moyens d'articulation respectifs desdites première et deuxième fourchettes sont réalisés en une seule pièce de sorte que ladite pièce forme un moyen commun d'articulation pour les première et deuxième fourchettes qui est lié à un carter du mécanisme ;
- la deuxième fourchette comporte un corps annulaire sensiblement de forme ovale qui délimite circonférentiellement un espace interne à l'intérieur duquel est agencé, globalement concentriquement, la première fourchette.

L'invention concerne encore un dispositif de commande pour un mécanisme à double embrayage, selon la revendication 12.

Avantageusement, la surface d'articulation de la première fourchette est destinée à coopérer avec au moins une surface interne d'articulation complémentaire des premiers moyens d'articulation et les première et deuxième surfaces d'articulation de la deuxième fourchette sont destinées à coopérer respectivement avec une première surface d'articulation et une deuxième surface d'articulation complémentaires des deuxièmes moyens d'articulation.

D'autres caractéristiques et avantages de l'invention apparaîtront à la lecture de la description détaillée qui va suivre, pour la compréhension de laquelle on se reportera aux dessins annexés parmi lesquels :
- la figure 1 est une vue en coupe axiale qui représente un exemple de mécanisme à double embrayage et un dispositif de commande associé selon un mode de réalisation préféré de l'invention et qui illustre chacune des fourchettes dans une position de repos pour laquelle les butées de commande et les diaphragmes sont dans une position correspondante dite position extrême arrière de débrayage ;
- la figure 2 est une vue de détail qui représente en perspective et en éclaté la première fourchette et la deuxième fourchette du dispositif de commande de la figure 1 et leurs moyens d'articulation par pivotement autour d'un axe commun ;
- la figure 3 est une vue de détail qui représente en perspective les fourchettes qui, après montage sur les moyens d'articulation et en position de repos comme illustrée sur la figure 1, sont sensiblement coplanaires selon la direction radiale ;
- la figure 4 est une vue similaire à celle de la figure 1 qui représente le mécanisme dans la position dans laquelle il se trouve après le déplacement vers l'avant de la première fourchette par les premiers moyens d'actionnement et qui illustre la première fourchette dans une position de travail pour laquelle la première butée de commande et les doigts du premier diaphragme sont dans une position extrême avant d'embrayage, la deuxième butée et les doigts du deuxième diaphragme étant demeurés dans leur position extrême arrière de débrayage ;
- la figure 5 est une vue similaire à celle de la figure 1 qui représente le mécanisme dans la position dans laquelle il se trouve après le déplacement vers l'avant de la deuxième fourchette par les deuxièmes moyens d'actionnement et qui illustre la deuxième fourchette dans une position de travail pour laquelle la deuxième butée de commande et les doigts du deuxième diaphragme sont dans une position extrême avant d'embrayage, la première butée et les doigts du premier diaphragme étant demeurés dans leur position extrême arrière de débrayage ;
- la figure 6 est une vue de détail en perspective qui représente les moyens d'articulation à pivot des première et deuxième fourchettes selon un mode de réalisation préféré du dispositif de commande et qui illustre la surface interne d'articulation de la première fourchette agencée transversalement entre les deux surfaces externes d'articulation de la deuxième fourchette ;
- les figures 7 et 8 sont des vues de détail en perspective qui représentent des variantes de réalisation des moyens d'articulation à pivot des fourchettes ;
- les figures 9 et 10 sont des vues de détail en perspective qui représentent un autre mode de réalisation des moyens d'articulation des première et deuxième fourchettes dans lequel lesdits moyens sont constitués par des rotules et une variante de réalisation ;
- les figures 11 à 14 sont des vues de détail en perspective qui représentent d'autres variantes de réalisation combinant des moyens d'articulation à pivot et à rotule pour les première et deuxième fourchettes.

Dans la description et les revendications, on utilisera à titre non limitatif et afin d'en faciliter la compréhension, les termes comme "avant" et "arrière", "supérieur" et "inférieur", "externe" et "interne" selon les définitions données dans la description et déterminées par rapport aux orientations longitudinale, verticale et transversale du trièdre (L, V, T) représenté sur les figures.

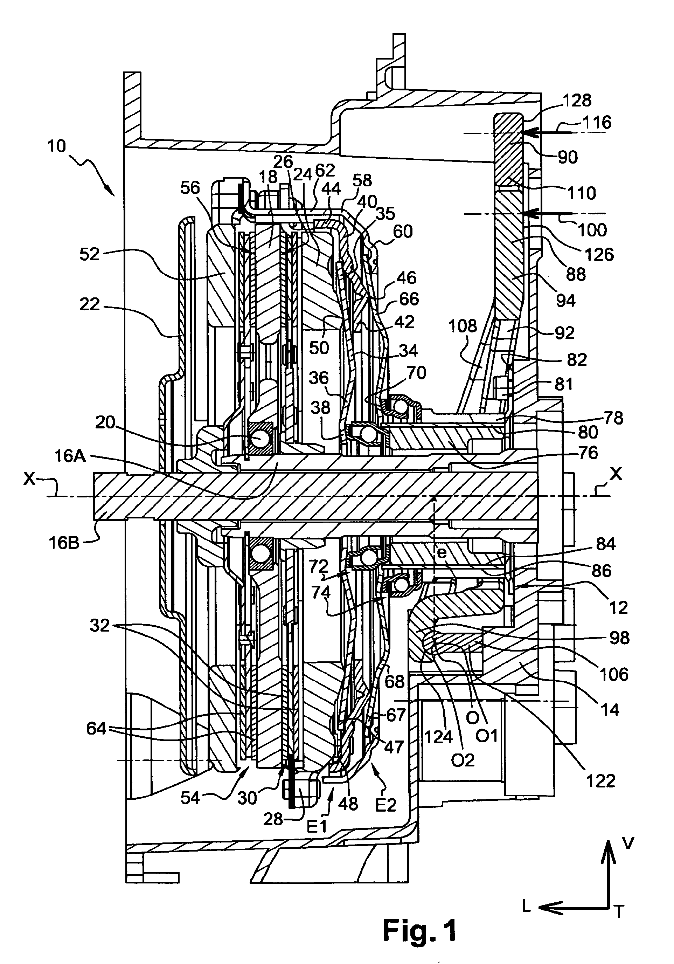

Par convention, les termes "avant" et "arrière" correspondent respectivement à la gauche et à la droite de la figure 1 et sont déterminés par référence à l'axe X de rotation qui s'étend longitudinalement selon le trièdre (L, V, T).

Par convention, les termes "supérieur" et "inférieur" correspondent respectivement au haut et au bas de la figure 1 et sont déterminés suivant l'orientation verticale du trièdre (L, V, T) et les termes "externe" et "interne" sont déterminés suivant l'orientation transversale du trièdre (L, V, T), lesquelles orientations verticale et transversale sont orthogonales à l'axe longitudinal X précité.

Par convention et en référence au trièdre (L, V, T), on détermine également une direction générale "axiale" suivant l'axe longitudinal X et une direction "radiale" qui, orthogonale à ladite direction axiale, désigne des éléments s'étendant globalement suivant un plan (V, T) vertical d'orientation transversale.

L'orientation verticale n'est nullement donnée en référence à la gravité terrestre.

Dans la description qui va suivre, des éléments identiques, analogues ou similaires seront désignés par des mêmes numéros de référence.

On a représenté sur la figure 1, un exemple de réalisation d'un mécanisme à double embrayage qui, notamment destiné à équiper un véhicule automobile, est désigné par la référence générale 10 et présente un axe X de rotation, ici d'orientation longitudinale selon le trièdre (L, V, T).

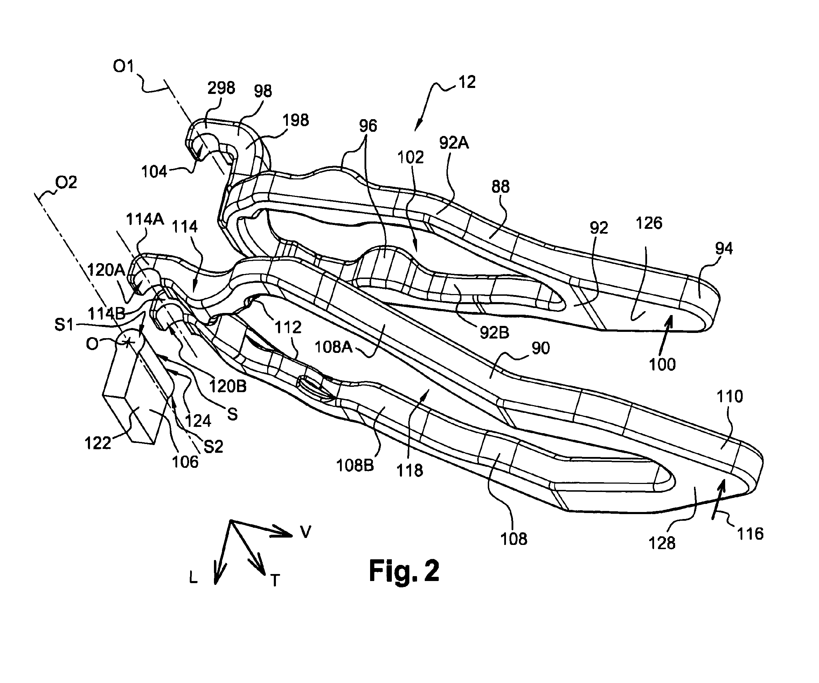

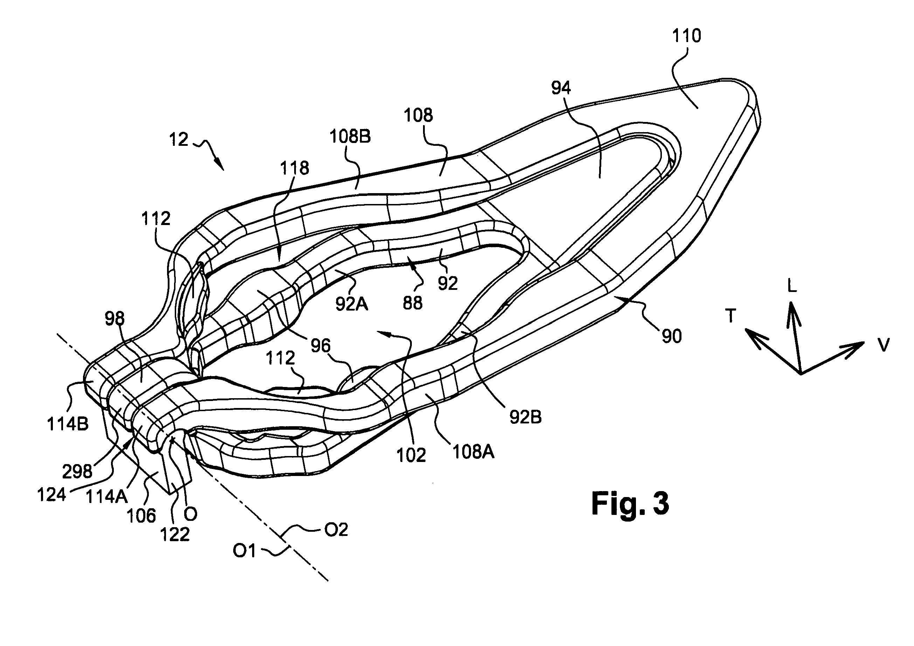

Le mécanisme à double embrayage 10 comporte un dispositif de commande 12 associé comportant au moins une double fourchette, plus particulièrement illustrée en détail aux figures 2 et 3 suivant un mode de réalisation préféré de l'invention.

Le mécanisme à double embrayage 10 est logé, avec au moins une partie du dispositif de commande 12, à l'intérieur d'un volume délimité par un carter 14.

Le mécanisme 10 à double embrayage est destiné à accoupler temporairement un arbre moteur (non représenté) qui est usuellement agencé longitudinalement en avant du mécanisme 10, ici à gauche de la figure 1, avec deux arbres menés, respectivement un premier arbre 16A et un deuxième arbre 16B.

L'arbre moteur constitue un arbre menant qui est destiné à être entraîné en rotation par un moteur (non représenté) du véhicule automobile.

Les deux arbres menés 16A et 16B du mécanisme 10 sont concentriques et sont montés rotatifs coaxialement à l'arbre moteur, le premier arbre mené 16A forme un tube à l'intérieur duquel est agencé le deuxième arbre mené 16B.

Une portion d'extrémité avant libre du deuxième arbre mené 16B s'étend longitudinalement au-delà de l'extrémité avant du premier arbre mené 16A, chacun desdits arbres menés 16A et 16B étant susceptibles de tourner indépendamment de l'autre.

Les arbres menés 16A et 16B sont destinés à être reliés à une boîte de vitesses (non représentée) agencée longitudinalement à l'arrière, c'est-à-dire ici à droite de la figure 1, au-delà du carter fixe 14.

Plus particulièrement, le premier arbre mené 16A correspond à certains rapports de vitesses de la boîte de vitesses, par exemple les rapports de vitesses pairs, tandis que le deuxième arbre mené 16B correspond aux autres rapports de vitesses, par exemple les rapports de vitesses impairs.

Le mécanisme 10 à double embrayage comporte un premier embrayage E1 et un deuxième embrayage E2 destinés à accoupler temporairement l'un des arbres menés 16A, 16B à l'arbre moteur et qui sont commandés sélectivement par le dispositif de commande 12 de manière à permettre respectivement le passage de rapports de vitesses de parités différentes.

De manière connue, le mécanisme 10 comporte un plateau radial circulaire de réaction 18 qui est monté à rotation autour de l'axe X longitudinal de rotation, par l'intermédiaire d'un palier, constitué de préférence par un roulement à billes 20.

Le plateau de réaction 18 est solidaire en rotation de l'arbre moteur. A cet effet, le mécanisme 10 comporte des moyens de liaison 22 avec l'arbre moteur, lesdits moyens 22 étant agencés à une extrémité longitudinale avant du mécanisme 10 et aptes à être fixés coaxialement à l'arbre moteur.

Selon les applications, de tels moyens de liaison sont par exemple constitués par un disque radial circulaire flexible 22. En variante, les moyens de liaison 22 assurent également une fonction d'amortissement et/ou filtration et sont par exemple constitués par un double volant amortisseur.

Le premier embrayage E1 du mécanisme 10 forme des premiers moyens d'accouplement temporaire du premier arbre mené 16A avec l'arbre moteur.

Le premier embrayage E1 comporte un premier plateau annulaire de pression 24 qui est monté solidaire en rotation du plateau de réaction 18 autour de l'axe X de rotation.

Le premier plateau de pression 24 est plus particulièrement agencé axialement en vis-à-vis d'une face arrière 26 du plateau de réaction 18.

Le premier plateau de pression 24 est monté coulissant axialement par rapport au plateau de réaction 18. A cet effet, le premier plateau de pression 24 est monté coulissant axialement sur des colonnettes 28 axiales qui sont fixées à la périphérie du plateau de réaction 18.

Le premier embrayage E1 comporte un premier disque coaxial de friction 30 qui est interposé axialement entre le plateau de réaction 18 et le premier plateau de pression 24. Le premier disque de friction 30 comporte sur ses deux faces une garniture annulaire de friction 32 qui est agencée axialement en vis-à-vis du premier plateau de pression 24 et du plateau de réaction 18.

Le premier disque de friction 30 est destiné à être serré contre la face arrière 26 du plateau de réaction 18 par le premier plateau de pression 24 pour accoupler temporairement le premier arbre mené 16A avec l'arbre moteur.

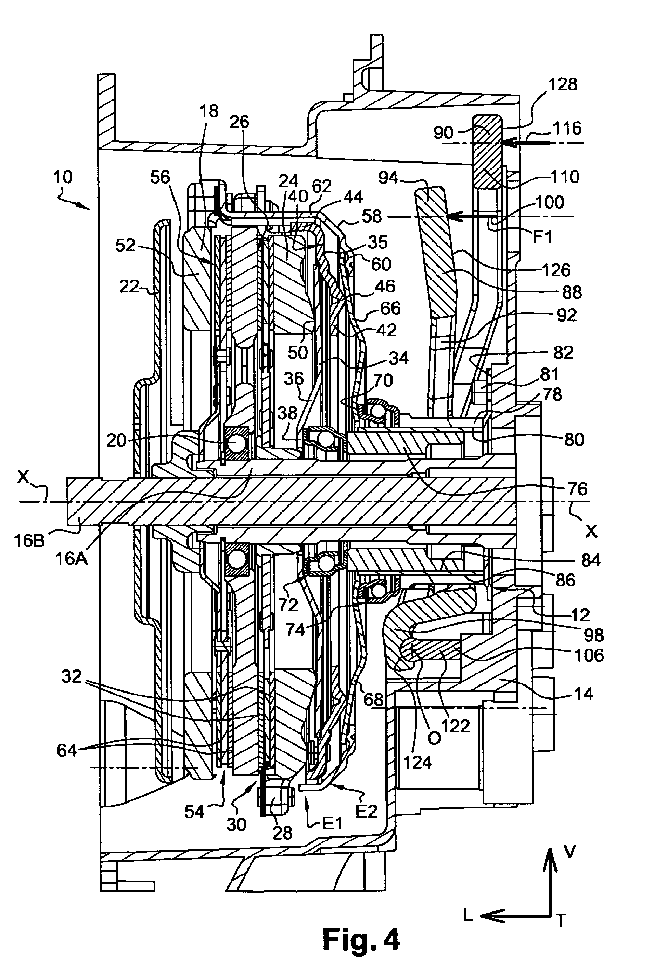

A cet effet, le premier disque de friction 30 est monté solidaire en rotation du premier arbre mené 16A, et il est monté coulissant axialement sur le premier arbre mené 16A tubulaire entre une position avant serrée (figure 4) contre la face arrière 26 du plateau de réaction 18 et une position arrière libre (figure 1) vers laquelle il est rappelé élastiquement et dans laquelle le premier disque de friction 30 est éloigné de la face arrière 26 du plateau de réaction 18.

Le jeu axial existant entre le premier disque de friction 30 dans sa position arrière libre et la face arrière 26 du plateau de réaction 18 est très faible de sorte que, par facilité, il n'a pas été représenté à la figure 1.

Le premier embrayage E1 comporte un premier diaphragme 34 annulaire coaxial arrière d'actionnement du premier plateau de pression 24.

Le premier diaphragme 34 comporte un anneau 35 radialement extérieur et des doigts 36 élastiques s'étendant radialement vers l'axe X de rotation depuis l'anneau 35 jusqu'à une extrémité intérieure libre 38. Tous les doigts 36 du premier diaphragme 34 sont de préférence identiques.

Plus particulièrement, le premier plateau de pression 24 est interposé entre le plateau de réaction 18 et le premier diaphragme 34.

Le premier diaphragme 34 prend appui sur un premier couvercle annulaire 40 agencé axialement en arrière, ledit premier couvercle 40 étant fixé radialement à l'extérieur au plateau de réaction 18.

Le premier couvercle arrière 40 comporte plus particulièrement un fond 42 radial annulaire et une jupe 44 axiale cylindrique qui s'étend vers l'avant depuis la périphérie extérieure du fond 42 jusqu'à la portion périphérique du plateau de réaction 18, en entourant le premier plateau de pression 24.

De préférence, le fond 42 annulaire comporte une nervure formée par un pli annulaire qui est coaxial à l'axe X de rotation et qui s'étend axialement vers l'arrière de manière à présenter une arête 46 annulaire en saillie vers l'arrière.

L'anneau 35 du premier diaphragme 34 est par exemple fixé sur une face avant du fond 42 du premier couvercle 40 par l'intermédiaire d'une bride 47 comportant des pattes qui s'étendent radialement vers l'intérieur. La bride 47 est fixée au premier couvercle 40 par des rivets 48 de manière que l'anneau 35 du premier diaphragme 34 soit serré axialement contre le fond 42 du premier couvercle 40 par les pattes radiales de la bride 47.

Une portion intermédiaire de chaque doigt 36 du premier diaphragme 34 est en appui axial sur une portion annulaire 50 du premier plateau de pression 24. Les doigts 36 du premier diaphragme 34 fonctionnent ainsi à la manière d'un levier qui est en appui par son extrémité supérieure contre le premier couvercle fixe 40.

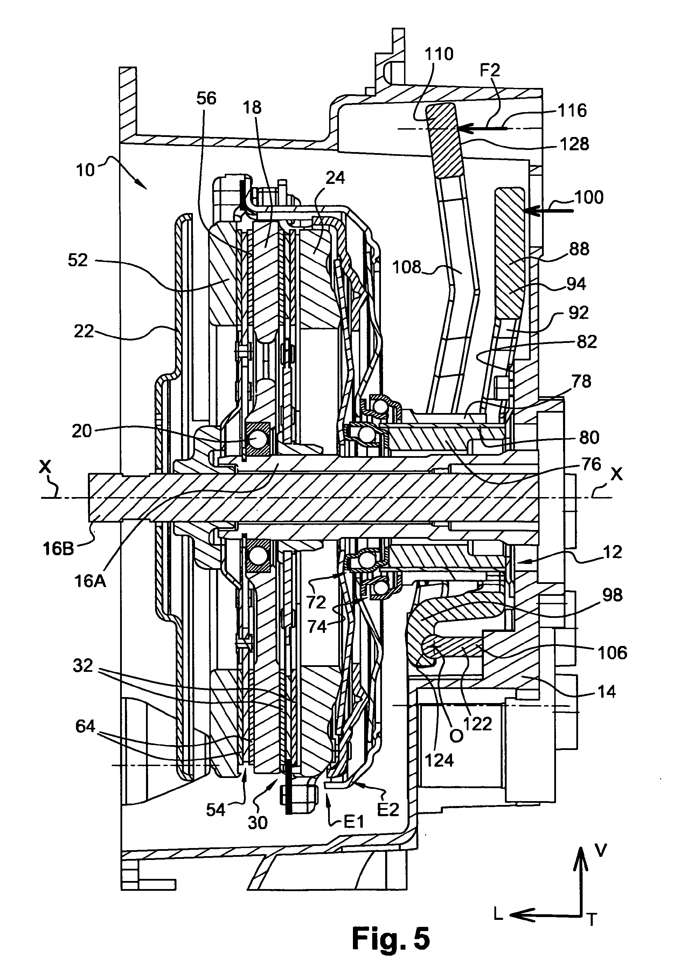

Les doigts 36 du premier diaphragme 34 sont flexibles élastiquement, notamment l'extrémité libre 38 des doigts 36 qui est déplacée entre une position extrême avant d'embrayage représentée à la figure 4 et une position extrême arrière de débrayage représentée à la figure 1 ou 5.

En position extrême avant d'embrayage, le premier diaphragme 34 sollicite axialement le premier plateau de pression 24 pour serrer le premier disque de friction 30 contre le plateau de réaction 18.

En position extrême arrière de débrayage vers laquelle les doigts 36 sont rappelés élastiquement, le premier plateau de pression 24 n'est plus sollicité axialement par le premier diaphragme 34 de manière que le premier disque de friction 30 se trouve alors dans sa position arrière libre, comme représenté à la figure 1 ou 5.

Ainsi, en position extrême avant d'embrayage, le premier arbre mené 16A est accouplé temporairement à l'arbre moteur, et en position extrême arrière de débrayage, le premier disque de friction 30 est écarté du plateau de réaction 18 et du premier plateau de pression 24 de manière que le premier arbre mené 16A soit découplé de l'arbre moteur.

Le mécanisme 10 à double embrayage comporte encore le deuxième embrayage E2 formant des deuxièmes moyens d'accouplement temporaire du deuxième arbre mené 16B avec l'arbre moteur.

Le deuxième embrayage E2 comporte un deuxième plateau de pression 52 et un deuxième disque de friction 54 dont les fonctions sont respectivement analogues à celles du premier plateau de pression 24 et du premier disque de friction 30.

Le deuxième plateau de pression 52 est monté axialement en vis-à-vis de la face avant 56 du plateau de réaction 18.

Le deuxième plateau de pression 52 est solidaire en rotation du plateau de réaction 18 par l'intermédiaire d'un deuxième couvercle 58 qui comporte un fond 60 annulaire radial arrière et une jupe 62 axiale cylindrique qui s'étend vers l'avant jusqu'au deuxième plateau de pression 52 en entourant le premier couvercle 40. Plus particulièrement, le deuxième couvercle 58 est relié à la périphérie du deuxième plateau de pression 52.

Le deuxième plateau de pression 52 est monté coulissant axialement par rapport au plateau de réaction 18 et le deuxième couvercle 58 forme un tiroir qui coulisse axialement.

Le deuxième couvercle 58 est donc solidaire du deuxième plateau de pression 52 en rotation et en coulissement axial.

Le deuxième disque coaxial de friction 54 est interposé axialement entre le plateau de réaction 18 et le deuxième plateau de pression 52. II comporte aussi sur ses deux faces une garniture annulaire de friction 64 qui est interposée axialement entre la face avant 56 du plateau de réaction 18 et le deuxième plateau de pression 52.

Le deuxième disque de friction 54 est destiné à être serré contre la face avant 56 du plateau de réaction 18 par le deuxième plateau de pression 52 pour accoupler temporairement le deuxième arbre mené 16B avec l'arbre moteur.

A cet effet, le deuxième disque de friction 54 est monté solidaire en rotation du deuxième arbre mené 16B, et il est monté coulissant axialement sur la portion d'extrémité avant du deuxième arbre mené 16B entre une position arrière serrée contre la face avant 56 du plateau de réaction 18 et une position avant libre vers laquelle il est rappelé élastiquement et dans laquelle le deuxième disque de friction 54 est éloigné de la face avant 56 du plateau de réaction 18.

Comme pour le premier disque de friction 52, le jeu axial très faible existant, en position arrière libre, entre le deuxième disque de friction 54 et la face avant 56 du plateau de réaction 18 n'a pas été représenté à la figure 1.

Le deuxième embrayage E2 comporte un deuxième diaphragme 66 annulaire coaxial arrière d'actionnement du deuxième plateau de pression 52. Le deuxième diaphragme 66 présente une structure analogue à celle du premier diaphragme 34.

Le deuxième diaphragme 66 est agencé axialement en arrière du premier diaphragme 34. II est interposé axialement entre l'arête 46 du premier couvercle 40 et une face avant du fond 60 du deuxième couvercle 58. Plus particulièrement, l'anneau 67 du deuxième diaphragme 66 est agencé en appui axial contre une face avant du fond 60 du deuxième couvercle 58.

Une portion intermédiaire des doigts 68 du deuxième diaphragme 66 prend appui axialement vers l'arrière sur l'arête 46 du premier couvercle 40.

Le deuxième diaphragme 66 est par exemple maintenu en position par des rivets (non représentés) qui sont fixés au premier couvercle 40. Les rivets sont alors agencés entre deux doigts 68 consécutifs du deuxième diaphragme 66 avec un jeu axial. Ainsi, le deuxième diaphragme 66 est maintenu en position tout en permettant le fléchissement des doigts 68.

Les doigts 68 du deuxième diaphragme 66 fonctionnent à la manière d'un levier. Ainsi, un effort axial d'actionnement qui est appliqué vers l'avant à l'extrémité libre 70 des doigts 68 est transmis au couvercle 34, les doigts 68 prenant appui sur l'arête 46 du premier couvercle 34, puis au plateau central 18.

Les doigts 68 du deuxième diaphragme 66 sont flexibles élastiquement entre une position extrême avant d'embrayage qui est représentée à la figure 5 et dans laquelle le deuxième diaphragme 66 sollicite axialement vers l'arrière le deuxième plateau de pression 52 pour serrer le premier disque de friction 54 contre le plateau de réaction 18 par l'intermédiaire du deuxième couvercle 58, et une position extrême arrière de débrayage vers laquelle les doigts 68 sont rappelés élastiquement et dans laquelle le deuxième plateau de pression 52 n'est plus sollicité axialement de manière que le deuxième disque de friction 54 soit dans sa position avant libre, comme représenté à la figure 1.

En position extrême avant d'embrayage (figure 5), le deuxième arbre mené 16B est accouplé à l'arbre moteur, et en position extrême arrière de débrayage (figure 1 ou 4), le deuxième arbre mené 16B est inversement découplé de l'arbre moteur.

Le mécanisme 10 comporte encore le dispositif de commande 12 associé qui est destiné à commander indépendamment, d'une part, le premier diaphragme 34 du premier embrayage E1 entre les positions extrêmes avant d'embrayage et arrière de débrayage et, d'autre part, le deuxième diaphragme 66 du deuxième embrayage E2 entre les positions extrêmes avant d'embrayage et arrière de débrayage.

A cet effet, le dispositif de commande 12 comporte une première butée 72 annulaire d'actionnement du premier diaphragme 34 qui est montée coulissante axialement entre une position extrême avant d'embrayage, comme illustrée à la figure 4, dans laquelle la butée 72 sollicite axialement vers l'avant l'extrémité libre 38 des doigts 36 du premier diaphragme 34 dans leur position extrême avant d'embrayage et une position extrême arrière de débrayage, comme illustrée à la figure 1 ou 5.

Le dispositif de commande 12 comporte également une deuxième butée 74 annulaire d'actionnement du deuxième diaphragme 66 qui est montée coulissante axialement entre une position extrême avant d'embrayage dans laquelle la butée 74 sollicite axialement vers l'avant l'extrémité libre 70 des doigts 68 du deuxième diaphragme 66 dans leur position extrême avant d'embrayage, comme illustrée à la figure 5, et une position extrême arrière de débrayage, comme illustrée à la figure 1 ou 4.

Les première et deuxième butées 72, 74 d'actionnement sont fixées respectivement sur un premier et un deuxième manchons 76, 78 axiaux coulissants.

Les manchons 76, 78 sont montés coulissants sur un guide tubulaire 80 présentant, en coupe axiale, globalement une forme en « L ».

Plus précisément, les manchons 76, 78 sont montés sur une partie axiale tubulaire du guide 80 qui s'étend vers l'avant depuis une autre partie radiale formant une collerette de fixation s'étendant radialement vers l'extérieur.

Le guide 80 est fixé par l'intermédiaire de la partie formant la collerette radiale à une face avant 82 du carter 14, par exemple par des rivets 81.

De préférence, le premier manchon 76 est monté coulissant à l'intérieur du guide tubulaire 80 contre une face cylindrique intérieure 84 du guide 80, tandis que le deuxième manchon 78 est monté coulissant à l'extérieur du guide tubulaire 80 sur une face cylindrique extérieure 86 du guide 80.

En variante non représentée, le premier manchon 76 est monté coulissant autour du guide tubulaire 80 contre la face cylindrique extérieure 86 du guide 80 et le deuxième manchon 78 est monté autour du premier manchon 76 de manière que le deuxième manchon 78 coulisse axialement sur la face cylindrique extérieure du premier manchon 76. Le premier manchon 76 est alors interposé radialement entre le guide 80 et le deuxième manchon 78.

Chaque butée 72, 74 est susceptible d'être commandée en coulissement par l'intermédiaire d'une fourchette associée, respectivement une première fourchette 88 et une deuxième fourchette 90, qui sont d'orientation globalement radiale.

On décrira maintenant en détails un mode de réalisation préféré de la première fourchette 88 et de la deuxième fourchette 90 et des moyens d'articulation associés selon l'invention, tels que plus particulièrement représentés aux figures 2 et 3.

La première fourchette 88 comporte un corps 92 de forme globalement ovale et qui comporte respectivement, de l'extérieur vers l'intérieur selon la direction radiale, une partie de manoeuvre 94, une partie d'actionnement 96 et une partie d'articulation 98.

La partie de manoeuvre 94 de la première fourchette 88 est destinée à coopérer avec des premiers moyens d'actionnement 100 aptes à exercer sélectivement sur ladite partie 94 un effort d'actionnement F1 déterminé propre à provoquer le déplacement de la première fourchette 88 depuis une position arrière de repos (figure 1) vers une position avant de travail (figure 4) correspondant à la position extrême avant d'embrayage de la butée de commande 72 et du premier diaphragme 34 du premier embrayage E1.

Le corps 92 de la première fourchette 88 se divise ensuite en deux branches 92A, 92B comportant chacune un renflement qui forme la partie d'actionnement 96 destinée à coopérer avec le premier manchon 76 de commande du coulissement de la première butée 72 sur le guide 80.

Les deux branches 92A et 92B délimitent transversalement, avec la partie d'actionnement 94 et avec la partie d'articulation 98 agencées à chaque extrémité verticale desdites branches 92A, 92B de la première fourchette 88, une ouverture centrale 102 destinée à être traversée longitudinalement par les moyens d'actionnement des butées 72, 74, notamment les manchons 76, 78 et le guide 80.

Les branches 92A, 92B du corps 92 se rejoignent ensuite pour former la partie d'articulation 98 de la première fourchette 88.

De préférence, la partie d'articulation 98 est conformée en un doigt courbe présentant, d'une part, une portion rectiligne 198 qui s'étend longitudinalement en saillie par rapport au plan radial principal du corps 92 et, d'autre part, une portion 298 qui, s'étendant verticalement, est reliée à la portion 198 à la faveur d'un coude sensiblement à angle droit.

La partie d'articulation 98 comporte une surface d'articulation 104, ici ménagée dans la face verticale arrière de la portion 298, qui est destinée à coopérer avec des premiers moyens d'articulation 106 de la première fourchette 88 montée mobile autour d'un premier axe de rotation 01.

Les premiers moyens d'articulation 106 comportent au moins une surface d'articulation S, dite interne, qui est complémentaire de la surface d'articulation 104 portée par la partie d'articulation 98 de la première fourchette 88.

La deuxième fourchette 90 comporte un corps 108 qui, également de forme globalement ovale, comporte respectivement, de l'extérieur vers l'intérieur selon la direction radiale, une partie de manoeuvre 110, une partie d'actionnement 112 et une partie d'articulation 114.

La partie de manoeuvre 110 de la deuxième fourchette 90 est destinée à coopérer avec des deuxièmes moyens d'actionnement 116 aptes à exercer sélectivement sur ladite partie 110 un effort d'actionnement F2 déterminé propre à provoquer le déplacement de la deuxième fourchette 90 depuis une position arrière de repos (figure 1) vers une position avant de travail (figure 5) correspondant à la position extrême avant d'embrayage de la butée de commande 74 et du deuxième diaphragme 66 du deuxième embrayage E2.

Le corps 108 de la deuxième fourchette 90 se divise ensuite en deux branches 108A, 108B comportant chacune un méplat qui forme la partie d'actionnement 112 destinée à coopérer avec le deuxième manchon 78 de commande du coulissement de la deuxième butée 74 sur le guide 80.

Les deux branches 108A et 108B délimitent transversalement avec la partie d'actionnement 112 et la partie d'articulation 114 à chaque extrémité verticale de la deuxième fourchette 90, une ouverture centrale 118 destinée à être traversée longitudinalement par les moyens d'actionnement des butées 72, 74, notamment les manchons 76, 78 et le guide 80.

Avantageusement, l'ouverture centrale 118 de la deuxième fourchette 90 détermine un espace interne à l'intérieur duquel est agencé, globalement concentriquement, la première fourchette 88.

La partie d'articulation 114 comporte respectivement deux bras 114A et 114B qui, d'orientation verticale, prolongent les branches 108A et 108B comportant les méplats formant la partie d'actionnement 112 de la deuxième fourchette 90.

Chaque bras 114A, 114B comporte sur une face radiale arrière une surface d'articulation, respectivement 120A et 120B, destinée à coopérer avec des deuxièmes moyens d'articulation de la deuxième fourchette 90 qui est montée mobile autour d'un deuxième axe de rotation 02.

Comme on peut le voir sur la figure 3, les deux bras 114A et 114B de la partie d'articulation 114 de la deuxième fourchette 90 sont globalement parallèles et délimitent entre eux un logement dans lequel pénètre la partie d'articulation 98, 298 de la première fourchette 88 de sorte que les parties d'articulation 98 et 114 des fourchettes sont sensiblement imbriquées l'une dans l'autre.

Avantageusement, la première fourchette 88 et la deuxième fourchette 90 sont conformées pour fonctionner sans interaction l'une avec l'autre de sorte que, lors du déplacement autour des deuxièmes moyens d'articulation 122 associés, la deuxième fourchette 90 n'entre pas en contact avec la première fourchette 88 et réciproquement.

Les deuxièmes moyens d'articulation 122 comportent respectivement une première surface d'articulation S1 complémentaire de la surface d'articulation 120A du bras 114A de la deuxième fourchette 90 et une deuxième surface d'articulation S2 complémentaire de la surface d'articulation 120B du bras 114B de la deuxième fourchette 90, lesdites surfaces d'articulation S1 et S2 des deuxièmes moyens d'articulation 122 sont dites externes par comparaison à la surface interne d'articulation S de la première fourchette 88.

En effet, selon une caractéristique importante de l'invention, la surface interne d'articulation S de la première fourchette 88 est agencée entre lesdites première et deuxième surfaces externes d'articulation S1 et S2 de la deuxième fourchette 90.

Avantageusement, la surface interne S est donc agencée transversalement entre les surfaces externes S1 et S2, lesdites surfaces d'articulation S, S1 et S2 étant juxtaposées les unes à côté des autres de manière à obtenir un agencement particulièrement compact et de faible encombrement et cela dans l'ensemble des orientations du trièdre (L, V, T).

Ainsi, les parties d'articulation 98 et 114 des première et deuxième fourchettes 88 et 90 s'interpénètrent de manière que la partie d'articulation 98 soit globalement comprise transversalement entre les bras 114A et 114B.

Chacune des fourchettes 88, 90 constitue un levier dit du second genre, c'est-à-dire par définition un levier dans lequel la force résistante s'exerce entre l'axe de rotation et la force motrice, à titre d'exemple on rappellera qu'un casse-noix constitue un tel levier du second genre.

De préférence, la position arrière de repos de la première fourchette 88 et de la deuxième fourchette 90 est déterminée par des moyens de butée (non représentés) qui sont par exemple portés par la face avant 82 du carter 14 adjacent.

De la même manière, le mécanisme 10 comporte avantageusement des moyens de butée aptes à limiter le déplacement des fourchettes 88, 90 et/ou des butées de commande 72, 74 axialement vers l'avant, au-delà d'une position déterminée, ce qui est susceptible de se produire après une usure importante des garnitures de chacun des disques de friction 30 et 54.

La première fourchette 88 est montée mobile sur les premiers moyens d'articulation 106 et autour d'un premier axe 01 tandis que la deuxième fourchette 90 est montée mobile sur les deuxièmes moyens d'articulation 122 et autour d'un deuxième axe 02.

Avantageusement, les premiers moyens d'articulation 106 portant la surface interne d'articulation S sont alignés longitudinalement avec les deuxièmes moyens d'articulation 122 portant les surfaces externes d'articulation S1 et S2 de manière que l'entraxe du premier axe de rotation O1 de la première fourchette 88 est égal à l'entraxe du deuxième axe de rotation 02 de la deuxième fourchette 90, l'entraxe référencé "e" sur la figure 1 correspondant à la distance radiale de chacun des axes 01, 02 par rapport à l'axe X longitudinal de rotation.

Grâce à un tel agencement des axes de rotation des fourchettes avec un même entraxe "e", on améliore encore les possibilités d'implantation des fourchettes 88, 90 du dispositif de commande 12 du mécanisme 10 qui présentent une compacité accrue.

En effet, l'implantation des fourchettes 88 et 90 peut être réalisée dans encombrement général plus réduit qu'auparavant, notamment avec un moindre encombrement selon la direction radiale par comparaison avec l'état de la technique.

Toujours par comparaison avec l'état de la technique, un tel agencement des axes des fourchettes 88 et 90 permet encore, à encombrement équivalent, d'obtenir une longueur de bras de levier supérieure pour au moins l'une des fourchettes de sorte que l'on améliore l'efficacité du dispositif de commande 12.

Avantageusement, les axes de rotation O1 et O2 des fourchettes sont situés du même côté de l'axe X longitudinal de rotation, grâce à quoi les première et deuxième fourchettes 88 et 90 s'étendent du même côté de l'axe X avec un bras de levier optimal.

Avantageusement, les moyens d'actionnement 100 et 116 respectivement associés aux fourchettes 88 et 90 sont situés du même côté de l'axe X longitudinal de rotation.

Grâce à quoi, on obtient un dispositif de commande 12 particulièrement peu encombrant et ceci sans sacrifier aux performances dudit dispositif en général et des fourchettes 88 et 90 en particulier.

Comme on peut le voir sur les figures, on entend par situés du même côté de l'axe X longitudinal de rotation, le fait que les axes de rotation O1 et 02 des fourchettes 88 et 90 sont disposés de manière que, par rapport à un plan horizontal de référence passant par l'axe longitudinal X de rotation du mécanisme, le premier axe de rotation O1 et le deuxième axe de rotation 02 se trouvent du même côté du plan de référence ainsi défini.

Autrement dit, les points d'intersection des axes de rotation 01, 02 et d'un plan de référence d'orientation verticale passant par ledit axe X longitudinal de rotation sont situés dans un même demi-plan vertical.

Avantageusement, les première et deuxième fourchettes 88 et 90 s'étendent radialement dans un même plan et sont, en position de repos, globalement coplanaires.

Avantageusement, les première et deuxième fourchettes 88 et 90 sont concentriques, la première fourchette 88 étant logée à l'intérieur de la deuxième fourchette 90.

Grâce à une telle conformation des première et deuxième fourchettes 88 et 90 imbriquées l'une dans l'autre telles des éléments cigognes, on obtient un sous-ensemble particulièrement compact et cela tant axialement que transversalement dès lors que les fourchettes 88 et 90 ne sont pas décalées angulairement l'une par rapport à l'autre autour de l'axe X mais s'étendent verticalement suivant une même direction radiale rectiligne, orthogonale à l'axe X.

Le premier axe de rotation 01 et le deuxième axe de rotation 02 sont plus particulièrement représentés à la figure 2.

Selon le mode de réalisation préféré représenté sur les figures, le premier axe de rotation O1 de la première fourchette 88 est coaxial au deuxième axe de rotation 02 de la deuxième fourchette 90 de sorte que les axes de rotation O1, 02 sont confondus.

Avantageusement, les première et deuxième fourchettes 88, 90 présentent donc un axe commun de rotation O qui est par conséquent le seul axe de rotation représenté sur certaines des figures dès lors que, porté par les moyens d'articulation, l'axe commun O constitue l'axe de rotation 01 et l'axe de rotation 02 respectivement.

Selon ce mode de réalisation préféré représenté sur les figures, les premiers moyens d'articulation 106 sont constitués par un premier pivot 106 de sorte que le premier axe de rotation 01 de la première fourchette 88, avantageusement formé par l'axe commun O, est un axe de pivotement qui, d'orientation sensiblement transversale, est orthogonal à l'axe X longitudinal de rotation.

De même, les deuxièmes moyens d'articulation 122 sont constitués par un deuxième pivot 122 de sorte que le deuxième axe de rotation 02 de la deuxième fourchette 90, également formé par l'axe commun O, est un axe de pivotement qui, d'orientation sensiblement transversale, est orthogonal à l'axe X longitudinal de rotation.

Par conséquent, dans le mode de réalisation préféré selon l'invention, la première fourchette 88 comme la deuxième fourchette 90 sont montées mobiles, entre leurs positions respectives arrière de repos et avant de travail, respectivement autour d'un premier axe 01 de pivotement porté par les premiers d'articulation 106 et d'un deuxième axe 02 de pivotement porté par les deuxièmes moyens d'articulation 122.

Les axes O1 et 02 de pivotement sont donc constitués par un seul unique axe commun O de pivotement lequel est avantageusement porté par un moyen unique d'articulation formant à la fois les premiers moyens d'articulation 106 de la première fourchette 88 et les deuxièmes moyens d'articulation 122 de la deuxième fourchette 90.

En variante non représentée, les premiers moyens d'articulation 106 de la première fourchette 88 et les deuxièmes moyens d'articulation 122 de la deuxième fourchette 90 sont distincts et constitués par au moins deux pivots agencés transversalement l'un à côté de l'autre pour présenter un même axe O de pivotement.

Les moyens d'articulation 106, 122 respectifs desdites première et deuxième fourchettes 88, 90 sont ainsi avantageusement réalisés en une seule pièce qui est de préférence liée au carter 14 de sorte que ladite pièce forme un moyen commun d'articulation pour les première et deuxième fourchettes 88, 90.

Grâce à une telle réalisation des moyens d'articulation, on simplifie également tant la fabrication que l'implantation des moyens d'articulation 106-122.

Pour réaliser l'articulation pivotante, ladite pièce formant un pivot commun des première et deuxième fourchettes 88, 90 comporte une surface d'articulation 124 unique formant respectivement la surface interne d'articulation S et les première et deuxième surfaces externes d'articulation S1 et S2, ladite surface 124 étant donc complémentaire des surfaces d'articulation respectives 104 et 120A, 120B des parties d'articulation 98 et 114 des première et deuxième fourchettes 88, 90.

De préférence et comme illustré en détail à la figure 6, le pivot commun 106-122 comporte axialement à l'avant une tête 123 portant ladite surface unique d'articulation 124 des fourchettes 88, 90 et, axialement en arrière de ladite tête 123, un pied 125 qui s'étend axialement jusqu'à la face 82 du carter 14.

Avantageusement, le pied 125 du pivot commun 106-122 est solidaire du carter 14 et le pivot est réalisé venu de matière, en une seule pièce, avec le carter 14.

En variante, le pivot commun 106-122 est une pièce distincte qui est rapportée à fixation sur la face 82 du carter par tous moyens appropriés, par exemple par soudage.

Les surfaces d'articulation respectives 104 et 120A, 120B des première et deuxième fourchettes 88, 90 d'une part, et la surface unique d'articulation 124 du pivot commun d'autre part, sont destinées à coopérer ensemble pour former une articulation pivotante autour de l'axe commun O et lesdites surfaces sont constituées par des surfaces cylindriques, ici de section globalement circulaire.

Avantageusement, les surfaces d'articulation respectives 104 et 120A, 120B des parties d'articulation 98 et 114 des première et deuxième fourchettes 88, 90 sont usinées simultanément lors d'une même opération.

De même, lorsque l'axe de rotation des fourchettes est un axe commun O de pivotement, on en réduit encore les coûts grâce à une unique opération d'usinage de la tête 123 du pivot commun 106-122 pour réaliser la surface unique d'articulation 124 formant les surfaces d'articulation S et S1, S2 de chacune des fourchettes 88 et 90 respectivement.

Avantageusement, le pivot commun 106-122 formant les moyens d'articulation des fourchettes 88 et 90 est lié au carter 14 par l'intermédiaire de son pied 125 qui s'étend axialement vers l'avant, ici de manière rectiligne, à partir de la face 82 formant le fond du carter 14 du mécanisme 10.

De préférence, l'axe commun O de pivotement des fourchettes 88 et 90 est porté par le pivot commun 106-122, lequel pivot commun est susceptible d'être, par comparaison avec l'état de la technique, disposé axialement plus en avant par rapport à la face 82 du carter 14.

Grâce à une telle implantation de l'axe O de pivotement éloignée vers l'avant de la face 82 du carter 14, la course effectuée par chaque butée de commande 72, 74 actionnée par la fourchette 88, 90 associée est maximale et obtenue pour une course correspondante des moyens d'actionnement 100 et 116 qui est avantageusement minimale.

De préférence, les bras 114A et 114B sont reliés entre eux par une partie du corps 108 qui forme un pont s'étendant transversalement entre eux de manière à faciliter l'usinage de chacune des surfaces 120A et 120B.

Avantageusement, la deuxième fourchette 90 présente ainsi une rigidité d'ensemble, notamment dans sa partie d'articulation 114, apte à éviter également tout contact avec la première fourchette 88 qui est agencée à l'intérieur de son corps 108 et dont la partie d'articulation 98 est interposée transversalement entres les bras 114A et 114B.

Avantageusement, les surfaces d'articulation 104, 120A et 120B des fourchettes 88 et 90 sont usinées simultanément en une seule opération pour une plus grande précision par rapport à la surface unique d'articulation 124 complémentaire du pivot commun 106-122.

Comme décrit précédemment, les figures 4 et 5 illustrent respectivement l'actionnement de la première fourchette 88 et de la deuxième fourchette 90 par des moyens d'actionnement associés 100 et 116.

Les moyens d'actionnement 100 et 116 sont par exemple constitués par un actionneur comportant une tige d'actionnement dont l'extrémité libre avant est en contact avec une face radiale arrière, respectivement 126 et 128, que comporte chacune des parties d'actionnement 94 et 110 des première et deuxième fourchettes 88, 90.

De préférence, les moyens d'actionnement 110, 116 sont constitués par un actionneur de type électromécanique.

Pour procéder à la commande du premier embrayage E1, les premiers moyens d'actionnement 100 sont commandés pour appliquer sur la face verticale arrière 126 de la première fourchette 88 un effort F1 déterminé qui provoque le pivotement de la fourchette 88 autour de l'axe commun de pivotement O de manière à déplacer la première fourchette 88 axialement vers l'avant depuis sa position arrière de repos, illustrée à la figure 1, jusqu'à sa position avant de travail illustrée à la figure 4.

Le déplacement de la première fourchette 88 de sa position arrière de repos vers sa position avant de travail provoque simultanément, par l'intermédiaire du premier manchon 76 qui coulisse sur le guide 80, le déplacement de la première butée de commande 72 depuis sa position extrême arrière de débrayage vers sa position extrême avant d'embrayage.

La première butée de commande 72 agit elle-même simultanément sur les doigts 36 du premier diaphragme 36 qui sollicite alors le premier plateau de pression 24 vers le plateau de réaction 18 afin de serrer entre eux le premier disque de friction 30 pour assurer l'accouplement du premier arbre mené 16A avec l'arbre moteur.

Pour procéder à la commande du deuxième embrayage E2, les deuxièmes moyens d'actionnement 116 sont commandés pour appliquer sur la face verticale arrière 128 de la deuxième fourchette 90 un effort F2 déterminé qui provoque le pivotement de la fourchette 90 autour de l'axe commun de pivotement O de manière à déplacer la deuxième fourchette 90 axialement vers l'avant depuis sa position arrière de repos, illustrée à la figure 1, jusqu'à sa position avant de travail illustrée à la figure 5.

Le déplacement de la deuxième fourchette 90 de sa position arrière de repos vers sa position avant de travail provoque simultanément, par l'intermédiaire du deuxième manchon 78 qui coulisse sur le guide 80, le déplacement de la deuxième butée de commande 74 depuis sa position extrême arrière de débrayage vers sa position extrême avant d'embrayage.

La deuxième butée de commande 74 agit elle-même simultanément sur les doigts 68 du deuxième diaphragme 66 qui sollicite alors le deuxième plateau de pression 24, axialement vers l'arrière, en direction du plateau de réaction 18 afin de serrer entre eux le deuxième disque de friction 54 pour assurer l'accouplement du deuxième arbre mené 16B avec l'arbre moteur.

Bien entendu, l'invention n'est nullement limitée au mode de réalisation préféré qui vient d'être décrit en référence aux figures 1 à 6.

De nombreuses variantes de réalisation des moyens d'articulation 106, 122 des fourchettes peuvent être envisagées sans sortir du cadre de l'invention.

Ainsi, on décrira ci-après de manière non limitative et en procédant par comparaison, notamment avec le mode de réalisation préféré décrit précédemment et illustré aux figures 1 à 6, différents modes et/ou variantes de réalisation des moyens d'articulation et des surfaces d'articulation que ces moyens comportent aux fins de réaliser le montage articulé des fourchettes 88 et 90.

Avantageusement, dans chacun des exemples ou variantes de réalisation décrites ci-après, la surface interne d'articulation S portée par les premiers moyens d'articulation 106 et associée à la première fourchette 88 est agencée transversalement entre les surfaces externes d'articulation S1 et S2.

Plus précisément, les surfaces externes d'articulation S1 et S2 sont disposées selon l'orientation transversale de part et d'autre de la surface interne d'articulation S et cela que les surfaces S et S1, S2 soient ou non décalées longitudinalement ou verticalement entre elles.

Selon une première variante représentée à la figure 7, les premier et deuxième moyens d'articulation 106 et 122 des fourchettes 88 et 90 sont réalisés comme précédemment sous la forme de pivots.

Les premiers moyens d'articulation 106 sont ainsi constitués par au moins un pivot, dit interne, de sorte que le premier axe de rotation 01 de la première fourchette 88 est un axe de pivotement qui est d'orientation sensiblement transversale et donc orthogonal à l'axe X longitudinal de rotation.

Les deuxièmes moyens d'articulation 122 sont donc également constitués par des pivots, respectivement un premier pivot 122A et un deuxième pivot 122B.

Le deuxième axe de rotation 02 de la deuxième fourchette 90 est un axe de pivotement qui, déterminé par lesdits pivots 122A, 122B, s'étend suivant une orientation sensiblement transversale et orthogonalement à l'axe X longitudinal de rotation.

Les premiers moyens d'articulation 106, formés ici par le pivot interne, comportent une surface interne S pour l'articulation de la première fourchette 88, ladite surface interne S étant destinée à coopérer avec la surface d'articulation 104 complémentaire que comporte la partie d'articulation 98 de la première fourchette 88.

Les premier et deuxième pivots 122A et 122B formant les deuxièmes moyens d'articulation 122 comportent respectivement une première surface externe d'articulation S1 et une deuxième surface externe d'articulation S2 qui sont destinées à coopérer avec les surfaces d'articulation complémentaires 120A et 120B des bras 114A et 114B de la partie d'articulation 114 de la deuxième fourchette 90.

Avantageusement, la surface interne d'articulation S est agencée transversalement entre lesdites première et deuxième surfaces externes d'articulation S1 et S2.

Par comparaison avec l'exemple de réalisation des figures 1 à 6, les premiers moyens d'articulation 106 portant la surface interne d'articulation S sont également alignés longitudinalement avec les deuxièmes moyens d'articulation 122 portant les surfaces externes d'articulation S1 et S2.

Ainsi, par rapport à l'axe longitudinal X de rotation, l'entraxe du premier axe de rotation 01 de la première fourchette 88 est égal à l'entraxe du deuxième axe de rotation 02 de la deuxième fourchette 90.

Les première et deuxième fourchettes 88, 90 présentent donc des axes de rotation 01 et 02 qui, tout en présentant le même entraxe "e" par rapport à l'axe X, sont parallèles et non plus confondus comme précédemment.

Selon cette première variante, le premier axe de rotation 01 de la première fourchette 88 et le deuxième axe de rotation 02 de la deuxième fourchette 90 sont décalés longitudinalement l'un par rapport à l'autre de sorte que les première et deuxième fourchettes 88 et 90 présentent des axes de rotation qui sont parallèles.

Les axes de rotation 01 et 02 sont ainsi compris dans un même plan horizontal (L, T) suivant le trièdre (L, V, T) représenté à la figure 7.

Avantageusement, les pivots 106, 122A et 122B formant mes moyens d'articulation respectifs desdites première et deuxième fourchettes 88 et 90 sont réalisés en une seule pièce.

De préférence, ladite pièce comporte une tête 123 qui est usinée pour former les surfaces d'articulation S, S1 et S2 de chacun des pivots 106, 122A et 122B de sorte que ladite tête 123 ne présente dès lors plus une surface unique d'articulation 124 mais un profil étagé comportant différents tronçons et dans lequel la surface interne S est agencée transversalement entre les surfaces externes S1 et S2 et longitudinalement en retrait vers l'arrière par rapport auxdites surfaces S1, S2.

Par comparaison avec les figures 1 à 6, la pièce commune portant les pivots 106, 122A et 122B comporte une surface d'articulation 124 étagée comportant, d'une part, à chacune de ses extrémités transversales un tronçon de surface d'articulation formé par les première et deuxième surfaces S1 et S2 complémentaires des surfaces d'articulation 120A et 120B des bras 114A et 144B de la deuxième fourchette 90 et, d'autre part, un tronçon central de surface d'articulation formé par la surface interne S complémentaire de la surface d'articulation 104 de la première fourchette 88.

Selon l'invention, le tronçon central de surface d'articulation de la première fourchette 88 est interposé transversalement entre les tronçons de surfaces d'articulation de la deuxième fourchette 90 agencés aux extrémités et portées par les pivots 122A et 122B solidaires de la pièce commune.

Selon la première variante, la surface interne d'articulation S de la première fourchette 88 portée par le pivot 106 est décalée longitudinalement ou axialement vers l'arrière par rapport aux surfaces externes d'articulation S1 et S2 de la deuxième fourchette 90 portées par les pivots 122A et 122B de sorte que les axes de rotation O1 et O2 soient parallèles et non confondus.

En variante, la surface interne d'articulation S de la première fourchette 88 portée par le pivot 106 est décalée longitudinalement vers l'avant par rapport aux surfaces externes d'articulation S1 et S2 de la deuxième fourchette 90 portées par les pivots 122A et 122B de sorte que ladite surface interne S fasse saillie axialement vers l'avant par rapport auxdites surfaces externes S1 et S2 en retrait.

Avantageusement, ladite pièce commune forme un moyen commun d'articulation pour les première et deuxième fourchettes 88 et 90 et la tête 123 se prolonge longitudinalement par un pied 125 qui est lié à la face 82 du carter 14 du mécanisme 10.

On décrira maintenant, par comparaison avec la première variante du mode de réalisation préféré, une deuxième variante de réalisation illustrée à la figure 8.

Les moyens d'articulation 106 et 122 à pivot sont analogues à ceux décrits pour la première variante illustrée à la figure 7.

Selon cette deuxième variante, la surface interne S d'articulation de la première fourchette 88 portée par le pivot 106 est non seulement décalée longitudinalement par rapport aux surfaces externes d'articulation S1 et S2 portées respectivement par les pivots 122A et 122B mais est encore décalée verticalement de sorte que les axes de rotation 01 et 02 sont parallèles mais pas compris dans un plan horizontal parallèle à l'axe X longitudinal de rotation.

Avantageusement, l'invention propose encore un dispositif de commande 12 pour un mécanisme 10 à double embrayage.

Le dispositif de commande 12 comporte au moins la première fourchette 88 et la deuxième fourchette 90 agencées dans une position de fonctionnement dans laquelle les fourchettes 88, 90 sont associées pour la commande dudit embrayage 10.

Avantageusement, la première fourchette 88 comporte une partie d'articulation 98 comportant au moins une surface d'articulation 104 et la deuxième fourchette 90 comporte une partie d'articulation 114 formée par les bras 114A, 114B comportant une première et une deuxième surfaces d'articulation 120A et 120B, ladite surface d'articulation 104 de la première fourchette 88 étant, en position de fonctionnement, agencée transversalement entre lesdites première et deuxième surfaces d'articulation 120A, 120B de la deuxième fourchette 90.

La surface d'articulation 104 de la première fourchette 88 est destinée à coopérer avec au moins une surface interne d'articulation S complémentaire des premiers moyens d'articulation 106.

Les première et deuxième surfaces d'articulation 120A et 120B de la deuxième fourchette 90 sont destinées à coopérer respectivement avec une première surface d'articulation S1 et une deuxième surface d'articulation S2 complémentaires des deuxièmes moyens d'articulation 122.

Bien entendu, les moyens d'articulation 106, 122 des première et deuxième fourchettes 88 et 90 ne sont nullement limités à une articulation de type pivotante.

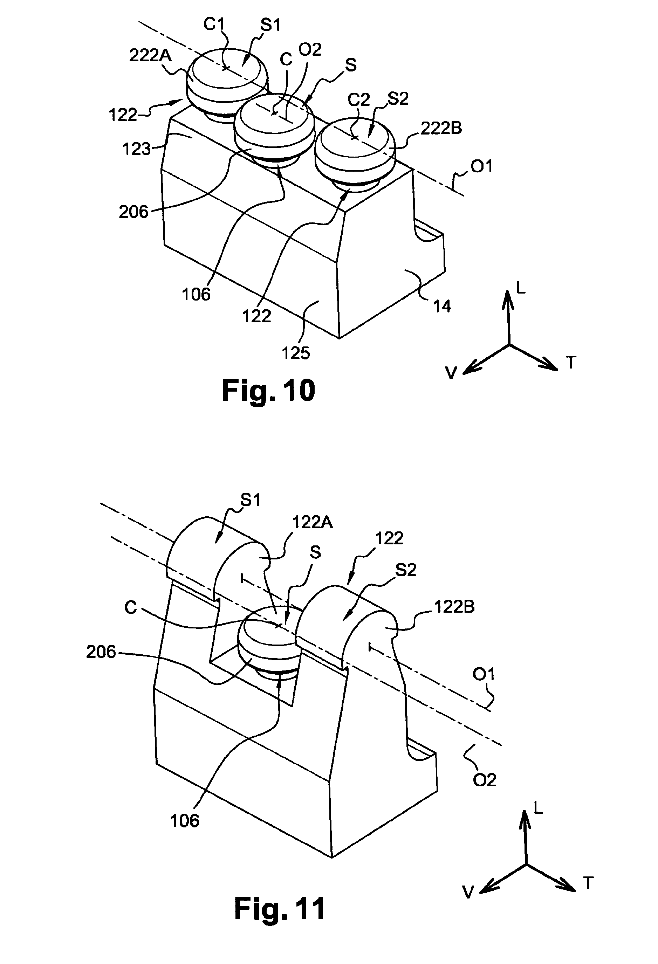

Selon un autre mode de réalisation illustré plus particulièrement aux figures 9 et 10, les premiers moyens d'articulation 106 de la première fourchette 88 et les deuxièmes moyens d'articulation 122 de la deuxième fourchette 90 sont constitués par une articulation à rotule.

Dans cet autre mode, les premiers moyens d'articulation 106 sont constitués par au moins une rotule centrale 206 et les deuxièmes moyens d'articulation 122 sont constitués par au moins des première et deuxième rotules, respectivement 222A et 222B.

La première fourchette 88 est donc montée mobile en rotation autour d'un centre de rotation C dont l'intersection avec un demi-plan transversal de référence, d'orientation verticale et orthogonal à l'axe longitudinal de rotation X, détermine ledit premier axe de rotation O1 de la première fourchette 88.

La deuxième fourchette 90 est montée mobile en rotation par l'intermédiaire de son bras 114A autour d'un premier centre de rotation C1 d'une première rotule 222A et par l'intermédiaire de son autre bras 114B autour d'un deuxième centre de rotation C2 d'une deuxième rotule 222B.

Les centres de rotation C1 et C2 déterminent le deuxième axe de rotation 02 de la deuxième fourchette 90 par intersection avec le demi-plan transversal de référence qui est d'orientation verticale et orthogonal à l'axe longitudinal de rotation X.

Les centres de rotation C, C1 et C2 des rotules 206, 222A et 222B sont alignés suivant l'orientation transversale de manière que le premier axe de rotation 01 de la première fourchette 88 passant par le centre C est coaxial au deuxième axe de rotation 02 de la deuxième fourchette 90 passant par les centres C1 et C2.

Plus précisément, les axes de rotation 01, 02 sont confondus et les première et deuxième fourchettes 88, 90 présentent un axe de rotation O commun.

Les premiers moyens d'articulation 106 formé par la rotule centrale 206 comportent au moins une surface interne S d'articulation de la première fourchette 88 et les deuxièmes moyens d'articulation 122 sont formés par les rotules externes 222A et 222B qui comportent respectivement une première surface d'articulation S1 et une deuxième surface d'articulation S2 de la deuxième fourchette 90.

La surface interne d'articulation S de la première fourchette 88 est agencée transversalement entre lesdites première et deuxième surfaces externes S1 et S2 d'articulation de la deuxième fourchette 90.

Avantageusement, la rotule 206 formant les premiers moyens d'articulation 106 et portant la surface interne d'articulation S est alignée longitudinalement avec les rotules externes 222A et 222B formant les deuxièmes moyens d'articulation 122 et portant les surfaces externes d'articulation S1, S2.

Ainsi, par rapport à l'axe X longitudinal de rotation, l'entraxe du premier axe 01 de rotation de la première fourchette 88 est égal à l'entraxe du deuxième axe de rotation 02 de la deuxième fourchette 90.

De préférence, les rotules 206, 222A et 222B formant les moyens d'articulation 106, 122 des première et deuxième fourchettes 88 et 90 sont portées par une seule pièce commune comportant, à son extrémité longitudinale avant, une tête 123 portant lesdits moyens d'articulation 106, 122 et un pied 125 qui, s'étendant longitudinalement en arrière de la tête 123, est lié à la face 82 du carter 14 du mécanisme.

La figure 10 représente une variante de réalisation qui est décrite ci-après par comparaison avec le mode de réalisation de la figure 9.

Selon cette variante, les premiers moyens d'articulation 106 portant la surface interne d'articulation S sont décalés verticalement par rapport aux deuxièmes moyens d'articulation 122 portant les surfaces externes d'articulation S1 et S2 de sorte que, par rapport à l'axe X longitudinal de rotation, l'entraxe du premier axe 01 de rotation de la première fourchette 88 est différent de l'entraxe du deuxième axe de rotation 02 de la deuxième fourchette 90.

Selon une variante non représentée, le premier axe de rotation 01 de la première fourchette 88 et le deuxième axe de rotation 02 de la deuxième fourchette 90 sont également décalés longitudinalement l'un par rapport à l'autre, en combinaison ou non avec le fait d'être décalés verticalement l'un par rapport à l'autre, de sorte que les première et deuxième fourchettes 88 et 90 présentent des axes de rotation 01 et 02 parallèles qui sont compris ou pas dans un même plan horizontal (L, T) selon que les moyens 106, 122 sont uniquement décalés longitudinalement ou également décalés verticalement.

Les axes de rotation 01 et 02 des première et deuxième fourchettes 88 et 90 sont situés du même côté de l'axe X de manière que, par rapport à un plan horizontal de référence passant par l'axe longitudinal X de rotation du mécanisme 10, le premier axe de rotation 01 et le deuxième axe de rotation 02 se trouvent du même côté dudit plan de référence.

Les première et deuxième fourchettes 88, 90 constituent comme précédemment chacune un levier d'un second genre, c'est que chaque fourchette 88, 90 constitue un levier dans lequel la force résistante qui lui est opposée, notamment par la butée 72, 74 associée, s'exerce sur une partie de d'actionnement 96, 112 de la fourchette 88, 90 qui est située entre l'axe de rotation 01, 02 et une partie de manoeuvre 94, 110 sur laquelle des moyens d'actionnement 100, 116 exercent une force motrice.

Avantageusement, la deuxième fourchette 90 comporte un corps annulaire 108 sensiblement de forme ovale qui délimite circonférentiellement un espace interne 118 à l'intérieur duquel est agencé, globalement concentriquement, la première fourchette 88, seules les parties d'articulation 98 et 114 des fourchettes 88, 90 étant modifiées selon le type de moyens d'articulation 106, 122 associés.

Toutefois, les modes de réalisation de l'invention ne sont également pas limités à une juxtaposition de moyens d'articulation 106, 122 qui soient du même type, c'est-à-dire soit à pivot comme illustré aux figures 6 à 8, soit à rotule comme illustré aux figures 9 et 10, ces types d'articulation pouvant avantageusement être combinés entre elles.

Les figures 11 à 14 représentent ainsi, à titre non limitatif, différentes variantes de moyens d'articulation 106, 122 mixtes comportant des moyens d'articulation à pivot et des moyens d'articulation à rotule.

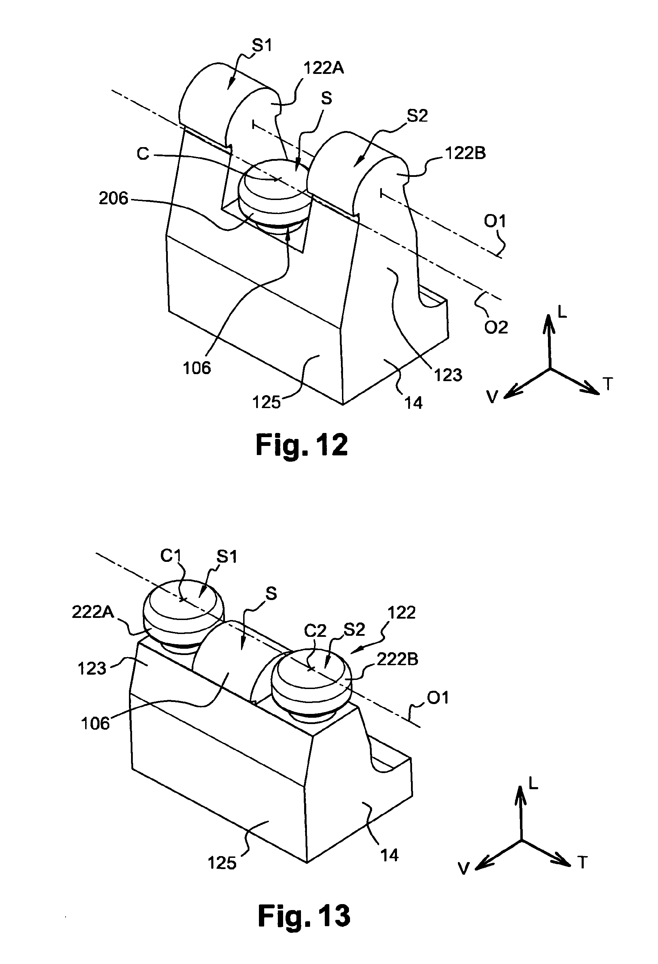

Dans les variantes de réalisation illustrées aux figures 11 et 12, les premiers moyens d'articulation 106 sont constitués par au moins une rotule et les deuxièmes moyens d'articulation 122 sont constitués par au moins deux pivots 122A et 122B.

La première fourchette 88 est donc montée mobile en rotation autour d'un centre de rotation C de la rotule 206 dont l'intersection avec un demi-plan transversal de référence, d'orientation verticale et orthogonal à l'axe longitudinal de rotation X, détermine le premier axe de rotation 01 de la première fourchette 88.

Les deuxièmes moyens d'articulation 122 sont constitués par des premier et deuxième pivots, respectivement 122A et 122B, de sorte que le deuxième axe de rotation 02 de la deuxième fourchette 90 est un axe de pivotement déterminé par lesdits pivots qui, d'orientation sensiblement transversale, est orthogonal à l'axe longitudinal X de rotation.

Avantageusement, les premiers moyens d'articulation 106 formés par la rotule 206 comportent au moins une surface interne d'articulation S de la première fourchette 88 et les deuxièmes moyens d'articulation 122 formés par les pivots 122A et 122B comportent respectivement une première surface d'articulation S1 et une deuxième surface d'articulation S2, dites externes, de la deuxième fourchette 90.

Avantageusement, la surface interne d'articulation S est agencée transversalement entre lesdites première et deuxième surfaces externes d'articulation S1 et S2.

De préférence, les premiers moyens d'articulation 106 portant la surface interne d'articulation S sont alignés longitudinalement avec les deuxièmes moyens d'articulation 122 portant les surfaces externes d'articulation S1, S2 de manière que, par rapport à l'axe X longitudinal de rotation, l'entraxe du premier axe 01 de rotation de la première fourchette 88 est égal à l'entraxe du deuxième axe de rotation 02 de la deuxième fourchette 90.

Avantageusement, le premier axe de rotation O1 de la première fourchette 88 est coaxial au deuxième axe de rotation 02 de la deuxième fourchette 90 de sorte que les axes de rotation O1, 02 sont confondus et que les première et deuxième fourchettes 88, 90 présentent un axe de rotation O commun.

Selon une variante de réalisation représentée à la figure 12 et décrite ci-après par comparaison avec la figure 11, les premiers moyens d'articulation 106 portant la surface interne d'articulation S sont décalés longitudinalement et verticalement par rapport aux deuxièmes moyens d'articulation 122 portant les surfaces externes d'articulation S1, S2 de sorte que, par rapport à l'axe X longitudinal de rotation, l'entraxe du premier axe O1 de rotation de la première fourchette 88 est différent de l'entraxe du deuxième axe de rotation 02 de la deuxième fourchette 90.

Dans la variante de la figure 12, le premier axe de rotation O1 de la première fourchette 88 et le deuxième axe de rotation 02 de la deuxième fourchette 90 sont au moins décalés verticalement l'un par rapport à l'autre de sorte que les première et deuxième fourchettes 88, 90 présentent des axes de rotation 01, 02 parallèles.

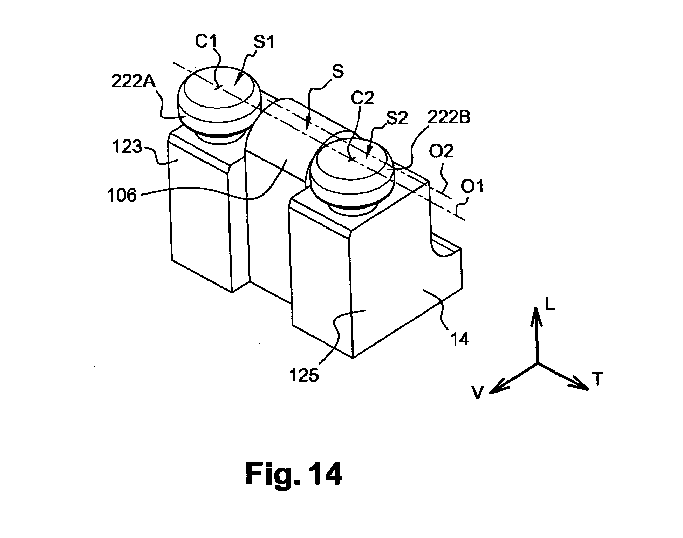

Selon deux autres variantes de réalisation illustrées aux figures 13 et 14, les premiers moyens d'articulation 106 sont constitués par un pivot interne ou central 106 et les deuxièmes moyens d'articulation 122 sont constitués par une première rotule 222A et une deuxième rotule 222B.

Dans ces variantes, les premiers moyens d'articulation 106 étant constitués par au moins un pivot 106, le premier axe de rotation 01 de la première fourchette 88 est un axe de pivotement qui, d'orientation sensiblement transversale, est orthogonal à l'axe longitudinal de rotation X.

De même, les deuxièmes moyens d'articulation 122 étant constitués par les première et deuxième rotules, la deuxième fourchette 90 est montée mobile en rotation autour d'un centre de rotation C1, C2 de chaque rotule 222A, 222B, lesdits centres de rotation C1 et C2 déterminant le deuxième axe de rotation 02 de la deuxième fourchette 90 par intersection avec un demi-plan transversal de référence, d'orientation verticale et orthogonal à l'axe longitudinal de rotation X.

Dans la variante de la figure 13, les axes de rotation 01 et 02 ne sont pas nécessairement confondus, les axes sont par exemple coaxiaux, parallèles entre eux, et alignés dans un même plan horizontal (L, T) parallèle à l'axe X longitudinal de rotation, les moyens d'articulation 106, 122 étant tout au plus décalés uniquement longitudinalement.

Dans la variante de la figure 14, les moyens d'articulation 106, 122 sont, par comparaison avec la figure 13, décalés verticalement entre eux de sorte que les axes O1 et O2 ne sont pas compris dans un plan qui est parallèle à l'axe X.

## Revendications

1. Mécanisme (10) à double embrayage, notamment pour véhicule automobile, présentant un axe (X) de rotation d'orientation longitudinale et comportant au moins un dispositif de commande (12) associé qui comporte au moins une première fourchette (88) et une deuxième fourchette (90) qui sont montées mobiles respectivement sur des premiers moyens d'articulation (106) autour d'un premier axe (O1) et sur des deuxièmes moyens d'articulation (122) autour d'un deuxième axe (02), les premiers moyens d'articulation (106, 206) comportant au moins une surface, dite interne, d'articulation (S) de la première fourchette (88) et les deuxièmes moyens d'articulation (122, 122A, 122B, 222A, 222B) comportant une première surface d'articulation (S1) et une deuxième surface d'articulation (S2), dites externes, de la deuxième fourchette (90), ladite surface interne d'articulation (S) étant agencée entre lesdites première et deuxième surfaces externes d'articulation (S1, S2), **caractérisé en ce que** la première fourchette (88) est logée à l'intérieur de la deuxième fourchette (90), lesdites première et deuxième fourchettes (88, 90) concentriques sont imbriquées l'une dans l'autre et sont, en position de repos, globalement coplanaires.

2. Mécanisme (10) selon la revendication 1, **caractérisé en ce que** les première et deuxième fourchettes (88, 90) constituent respectivement un levier d'un second genre.

3. Mécanisme (10) selon la revendication 1, **caractérisé en ce que** les premiers moyens d'articulation (106, 206) portant la surface interne d'articulation (S) sont alignés longitudinalement avec les deuxièmes moyens d'articulation (122, 122A, 122B, 222A, 222B) portant les surfaces externes d'articulation (S1, S2) de manière que, par rapport à l'axe (X) longitudinal de rotation, l'entraxe du premier axe (O1) de rotation de la première fourchette (88) est égal à l'entraxe du deuxième axe de rotation (02) de la deuxième fourchette (90).

4. Mécanisme (10) selon la revendication 1, **caractérisé en ce que** les premiers moyens d'articulation (106, 206) portant la surface interne d'articulation (S) sont suivant la direction verticale qui est orthogonale à la direction longitudinale définie par l'axe (X) de rotation, décalés par rapport aux deuxièmes moyens d'articulation (122, 122A, 122B, 222A, 222B) portant les surfaces externes d'articulation (S1, S2) de sorte que, par rapport audit axe (X) longitudinal de rotation, l'entraxe du premier axe (O1) de rotation de la première fourchette (88) est différent de l'entraxe du deuxième axe de rotation (02) de la deuxième fourchette (90).

5. Mécanisme (10) selon la revendication 3, **caractérisé en ce que** le premier axe de rotation (O1) de la première fourchette (88) est coaxial au deuxième axe de rotation (02) de la deuxième fourchette (90) de sorte que les axes de rotation (01, 02) sont confondus et que les première et deuxième fourchettes (88, 90) présentent un axe de rotation (O) commun.

6. Mécanisme (10) selon l'une des revendications 3 ou 4, **caractérisé en ce que** le premier axe de rotation (O1) de la première fourchette (88) et le deuxième axe de rotation (02) de la deuxième fourchette (90) sont décalés longitudinalement et/ou verticalement l'un par rapport à l'autre de sorte que les première et deuxième fourchettes (88, 90) présentent des axes de rotation (01, 02) parallèles.

7. Mécanisme (10) selon la revendication 1, **caractérisé en ce que** les premiers moyens d'articulation (106) sont constitués par au moins un pivot (106) de sorte que le premier axe de rotation (O1) de la première fourchette (88) est un axe de pivotement qui, d'orientation sensiblement transversale, est orthogonal à l'axe longitudinal de rotation (X).

8. Mécanisme (10) selon la revendication 1, **caractérisé en ce que** les premiers moyens d'articulation (106) sont constitués par au moins une rotule (206) de sorte que la première fourchette (88) est montée mobile en rotation autour d'un centre de rotation (C) dont l'intersection avec un demi-plan transversal de référence, d'orientation verticale et orthogonal à l'axe longitudinal de rotation (X), détermine ledit premier axe de rotation (O1) de la première fourchette (88).

9. Mécanisme (10) selon la revendication 1, **caractérisé en ce que** les deuxièmes moyens d'articulation (122) sont constitués par au moins des premier et deuxième pivots (122A, 122B) de sorte que le deuxième axe de rotation (02) de la deuxième fourchette (90) est un axe de pivotement déterminé par lesdits pivots (122A, 122B) qui, d'orientation sensiblement transversale, est orthogonal à l'axe longitudinal de rotation (X).

10. Mécanisme (10) selon la revendication 1, **caractérisé en ce que** les deuxièmes moyens d'articulation (122) sont constitués par au moins des première et deuxième rotules (222A, 222B) de sorte que la deuxième fourchette (90) est montée mobile en rotation autour d'un centre de rotation (C1, C2) de chaque rotule (222A, 222B), lesdits centres de rotation (C1, C2) déterminant par intersection avec un demi-plan transversal de référence, d'orientation verticale et orthogonal à l'axe longitudinal de rotation (X), ledit deuxième axe de rotation (02) de la deuxième fourchette (90).

11. Mécanisme (10) selon la revendication 1, **caractérisé en ce que** les moyens d'articulation (106, 122) respectifs desdites première et deuxième fourchettes (88, 90) sont réalisés en une seule pièce de sorte que ladite pièce forme un moyen commun d'articulation (106, 122) pour les première et deuxième fourchettes (88, 90) qui est lié à un carter (14) du mécanisme.

12. Dispositif de commande (12) pour un mécanisme (10) à double embrayage, comportant au moins une première fourchette (88) et une deuxième fourchette (90) agencées dans une position de fonctionnement dans laquelle les fourchettes (88, 90) sont associées pour la commande dudit embrayage (10),
la première fourchette (88) comportant une partie d'articulation (98) comportant au moins une surface d'articulation (104) et la deuxième fourchette (90) comporte une partie d'articulation (114, 114A, 114B) comportant une première et une deuxième surfaces d'articulation (120A, 120B), ladite surface d'articulation (104) de la première fourchette (88) étant, en position de fonctionnement, agencée entre lesdites première et deuxième surfaces d'articulation (120A, 120B) de la deuxième fourchette (90), **caractérisé en ce que** la première fourchette (88) est logée à l'intérieur de la deuxième fourchette (90) et **en ce que** lesdites première et deuxième fourchettes (88, 90) concentriques sont imbriquées l'une dans l'autre et sont, en position de repos, globalement coplanaires.

13. Dispositif de commande (12) selon la revendication 12, **caractérisé en ce que** la surface d'articulation (104) de la première fourchette (88) est destinée à coopérer avec au moins une surface interne d'articulation (S) complémentaire des premiers moyens d'articulation (106, 206) et **en ce que** les première et deuxième surfaces d'articulation (120A, 120B) de la deuxième fourchette (90) sont destinées à coopérer respectivement avec une première surface d'articulation (S1) et une deuxième surface d'articulation (S2) complémentaires des deuxièmes moyens d'articulation (122).

## Patentansprüche

1. Doppelkupplungsmechanismus (10), insbesondere für Kraftfahrzeuge, der eine längs ausgerichtete Rotationsachse (X) aufweist und mindestens eine damit verknüpfte Betätigungsvorrichtung (12) umfasst, die zumindest eine erste Gabel (88) und eine zweite Gabel (90) umfasst, welche jeweils beweglich um eine erste Achse (O1) auf ersten Gelenkmitteln (106) und um eine zweite Achse (02) auf zweiten Gelenkmitteln (122) montiert sind, wobei die ersten Gelenkmittel (106, 206) mindestens eine als innere bezeichnete Gelenkfläche (S) der ersten Gabel (88) aufweisen und die zweiten Gelenkmittel (122, 122A, 122B, 222A, 222B) eine erste Gelenkfläche (S1) und eine zweite Gelenkfläche (S2) der zweiten Gabel (90) aufweisen, die als äußere Gelenkflächen bezeichnet werden, wobei die besagte innere Gelenkfläche (S) zwischen den besagten ersten und zweiten äußeren Gelenkflächen (S1, S2) angeordnet ist, **dadurch gekennzeichnet, dass** die erste Gabel (88) im Inneren der zweiten Gabel (90) untergebracht ist, die besagte erste und zweite Gabel (88, 90) einander konzentrisch übergreifen und in der Ruheposition im wesentlichen komplanar sind.

2. Mechanismus (10) nach Anspruch 1, **dadurch gekennzeichnet, dass** die erste und zweite Gabel (88, 90) jeweils einen Hebel zweiter Ordnung bilden.

3. Mechanismus (10) nach Anspruch 1, **dadurch gekennzeichnet, dass** die die innere Gelenkfläche (S) tragenden ersten Gelenkmittel (106, 206) in Längsrichtung derart mit den die äußeren Gelenkflächen (S1, S2) tragenden zweiten Gelenkmitteln (122, 122A, 122B, 222A, 222B) aneinandergereiht sind, dass bezogen auf die längs ausgerichtete Rotationsachse (X) der Achsabstand der ersten Rotationsachse (O1) der ersten Gabel (88) gleich ist dem Achsabstand der zweiten Rotationsachse (02) der zweiten Gabel (90).

4. Mechanismus (10) nach Anspruch 1, **dadurch gekennzeichnet, dass** die die innere Gelenkfläche (S) tragenden ersten Gelenkmittel (106, 206) entlang der vertikalen Richtung, welche senkrecht zu der durch die Rotationsachse (X) definierten Längsrichtung verläuft, relativ zu den die äußeren Gelenkflächen (S1, S2) tragenden zweiten Gelenkmitteln (122, 122A, 122B, 222A, 222B) versetzt sind, so dass bezogen auf die besagte längs ausgerichtete Rotationsachse (X) der Achsabstand der ersten Rotationsachse (O1) der ersten Gabel (88) von dem Achsabstand der zweiten Rotationsachse (02) der zweiten Gabel (90) verschieden ist.

5. Mechanismus (10) nach Anspruch 3, **dadurch gekennzeichnet, dass** die erste Rotationsachse (O1) der ersten Gabel (88) koaxial mit der zweiten Rotationsachse (02) der zweiten Gabel (90) ist, so dass die Rotationsachsen (01, 02) zusammenfallen und die erste und zweite Gabel (88, 90) eine gemeinsame Rotationsachse (O) aufweisen.

6. Mechanismus (10) nach einem der Ansprüche 3 oder 4, **dadurch gekennzeichnet, dass** die erste Rotationsachse (O1) der ersten Gabel (88) und die zweite Rotationsachse (02) der zweiten Gabel (90) in Längsrichtung und/oder in Vertikalrichtung relativ zueinander versetzt sind, so dass die erste und zweite Gabel (88, 90) parallele Rotationsachsen (01, 02) aufweisen.

7. Mechanismus (10) nach Anspruch 1, **dadurch gekennzeichnet, dass** die ersten Gelenkmittel (106) durch mindestens einen Drehzapfen (106) gebildet sind, so dass die erste Rotationsachse (O1) der ersten Gabel (88) eine Drehachse ist, die, in etwa quer ausgerichtet, senkrecht zu der längs ausgerichteten Rotationsachse (X) liegt.

8. Mechanismus (10) nach Anspruch 1, **dadurch gekennzeichnet, dass** die ersten Gelenkmittel (106) durch mindestens einen Kugelkopf (206) gebildet sind, so dass die erste Gabel (88) um ein Rotationszentrum (C) herum rotatorisch beweglich montiert ist, dessen Überschneidung mit einer quer verlaufenden Referenz-Halbebene mit vertikaler und zu der längs ausgerichteten Rotationsachse (X) senkrechter Ausrichtung die besagte erste Rotationsachse (O1) der ersten Gabel (88) bestimmt.

9. Mechanismus (10) nach Anspruch 1, **dadurch gekennzeichnet, dass** die zweiten Gelenkmittel (122) durch mindestens erste und zweite Drehzapfen (122A, 122B) gebildet sind, so dass die zweite Rotationsachse (02) der zweiten Gabel (90) eine durch die besagten Drehzapfen (122A, 122B) bestimmte Drehachse ist, die, in etwa quer ausgerichtet, senkrecht zu der längs ausgerichteten Rotationsachse (X) liegt.

10. Mechanismus (10) nach Anspruch 1, **dadurch gekennzeichnet, dass** die zweiten Gelenkmittel (122) durch mindestens erste und zweite Kugelköpfe (222A, 222B) gebildet sind, so dass die zweite Gabel (90) um ein Rotationszentrum (C1, C2) von jedem Kugelkopf (222A, 222B) herum rotatorisch beweglich montiert ist, wobei die Rotationszentren (C1, C2) durch Überschneidung mit einer quer verlaufenden Referenz-Halbebene mit vertikaler und zu der längs ausgerichteten Rotationsachse (X) senkrechter Ausrichtung die besagte zweite Rotationsachse (02) der zweiten Gabel (90) bestimmen.

11. Mechanismus (10) nach Anspruch 1, **dadurch gekennzeichnet, dass** die jeweiligen Gelenkmittel (106, 122) der besagten ersten und zweiten Gabel (88, 90) aus einem einzigen Stück ausgeführt sind, so dass das besagte Stück ein gemeinsames Gelenkmittel (106, 122) für die erste und zweite Gabel (88, 90) bildet, welches mit einem Gehäuse (14) des Mechanismus verbunden ist.

12. Betätigungsvorrichtung (12) für einen Doppelkupplungsmechanismus (10), umfassend zumindest eine erste Gabel (88) und eine zweite Gabel (90), die in einer Betriebsposition angeordnet sind, in welcher die Gabeln (88, 90) für die Betätigung der besagten Kupplung (10) vereinigt sind, wobei die erste Gabel (88) einen Gelenkteil (98) aufweist, welcher zumindest eine Gelenkfläche (104) umfasst, und die zweite Gabel (90) einen Gelenkteil (114, 114A, 114B) aufweist, welcher eine erste und eine zweite Gelenkfläche (120A, 120B) umfasst, wobei die besagte Gelenkfläche (104) der ersten Gabel (88) in der Betriebsposition zwischen den besagten ersten und zweiten Gelenkflächen (120A, 120B) der zweiten Gabel (90) angeordnet ist, **dadurch gekennzeichnet, dass** die erste Gabel (88) im Inneren der zweiten Gabel (90) untergebracht ist, und dadurch, dass die besagte erste und zweite Gabel (88, 90) einander konzentrisch übergreifen und in der Ruheposition im wesentlichen komplanar sind.

13. Betätigungsvorrichtung (12) nach Anspruch 12, **dadurch gekennzeichnet, dass** die Gelenkfläche (104) der ersten Gabel (88) dazu bestimm ist, mit zumindest einer komplementären inneren Gelenkfläche (S) der ersten Gelenkmittel (106, 206) zusammenzuwirken, und dadurch, dass die ersten und zweiten Gelenkflächen (120A, 120B) der zweiten Gabel (90) dazu bestimmt sind, jeweils mit einer komplementären ersten Gelenkfläche (S1) und einer komplementären zweiten Gelenkfläche (S2) der zweiten Gelenkmittel (122) zusammenzuwirken.

## Claims

1. Dual clutch mechanism (10), in particular for a motor vehicle, having a longitudinally oriented rotational axis (X) and comprising at least one associated control device (12) that comprises at least a first fork (88) and a second fork (90) mounted so as to be mobile on first articulation means (106) about a first axis (O1) and on second articulation means (122) about a second axis (02), respectively, the first articulation means (106, 206) comprising at least one articulation surface (S), designated internal, of the first fork (88) and second articulation means (122, 122A, 122B, 222A, 222B) comprising a first articulation surface (S1) and a second articulation surface (S2), designated external, of the second fork (90), said internal articulation surface (S) being arranged between said first and second external articulation surfaces (S 1, S2), **characterized in that** the first fork (88) is located inside the second fork (90), said first and second concentric forks (88, 90) are imbricated within one another and are, in the rest position, coplanar overall.

2. Mechanism (10) according to claim 1, **characterized in that** the first and second forks (88, 90) respectively constitute a lever of a second type.

3. Mechanism (10) according to claim 1, **characterized in that** the first articulation means (106, 206) supporting the internal articulation surface (S) are longitudinally aligned with the second articulation means (122, 122A, 122B, 222A, 222B) supporting the external articulation surfaces (S 1, S2) so that, relative to the longitudinal rotational axis (X), the interaxial distance of the first rotational axis (O1) of the first fork (88) is equal to the interaxial distance of the second rotational axis (02) of the second fork (90).

4. Mechanism (10) according to claim 1, **characterized in that** the first articulation means (106, 206) supporting the internal articulation surface (S), following the vertical direction which is orthogonal to the longitudinal direction defined by the rotational axis (X), are offset relative to the second articulation means (122, 122A, 122B, 222A, 222B) supporting the external articulation surfaces (S1, S2) so that, relative to said longitudinal rotational axis (X), the interaxial distance of the first rotational axis (O1) of the first fork (88) is different from the interaxial distance of the second rotational axis (02) of the second fork (90).

5. Mechanism (10) according to claim 3, **characterized in that** the first rotational axis (O1) of the first fork (88) is coaxial with the second rotational axis (02) of the second fork (90) so that the rotational axes (O1, O2) are merged and so that the first and second forks (88, 90) have a common rotational axis (O).

6. Mechanism (10) according to any one of claims 3 or 4, **characterized in that** the first rotational axis (O1) of the first fork (88) and the second rotational axis (02) of the second fork (90) are longitudinally and/or vertically offset one relative to another so that the first and second forks (88, 90) have parallel rotational axes (O1, O2).

7. Mechanism (10) according to claim 1, **characterized in that** the first articulation means (106) are constituted by at least one pivot (106) in such a way that the first rotational axis (O1) of the first fork (88) is a fulcrum pin which, of substantially transverse orientation, is orthogonal to the longitudinal rotational axis (X).

8. Mechanism (10) according to claim 1, **characterized in that** the first articulation means (106) are constituted by at least one spherical bearing (206) in such a way that the first fork (88) mounted so as to be mobile about a centre of rotation (C) whose intersection with a reference transverse half-plane, of vertical orientation and orthogonal to the longitudinal rotational axis (X), determines said first rotational axis (O1) of the first fork (88).

9. Mechanism (10) according to claim 1, **characterized in that** the second articulation means (122) are constituted by at least first and second pivots (122A, 122B) in such a way that the second rotational axis (02) of the second fork (90) is a fulcrum pin determined by said pivots (122A, 122B) which, of substantially transverse orientation, is orthogonal to the longitudinal rotational axis (X).

10. Mechanism (10) according to claim 1, **characterized in that** the second articulation means (122) are constituted by at least first and second spherical bearings (222A, 222B) in such a way that the second fork (90) is mounted so as to be mobile about a centre of rotation (C1, C2) of each spherical bearing (222A, 222B), said centres of rotation (C1, C2), determining by intersection with a reference transverse half-plane, of vertical orientation and orthogonal to the longitudinal rotational axis (X), said second rotational axis (02) of the second fork (90).

11. Mechanism (10) according to claim 1, **characterized in that** the respective articulation means (106, 122) of said first and second forks (88, 90) are implemented as a single part in such a way that said part forms common articulation means (106, 122) for the first and second forks (88, 90) which is linked to a casing (14) of the mechanism.

12. Control device (12) for a dual clutch mechanism (10), comprising at least a first fork (88) and a second fork (90) arranged in a functional position in which the forks (88, 90) are combined for controlling said clutch (10), the first fork (88) comprising a articulation part (98) comprising at least one articulation surface (104) and the second fork (90) comprises a articulation part (114, 114A, 114B) comprising a first and a second articulation surface (120A, 120B), said articulation surface (104) of the first fork (88) being, in functional position , arranged between said first and second articulation surfaces (120A, 120B) of the second fork (90), **characterized in that** the first fork (88) is located inside the second fork (90) and **in that** said first and second concentric forks (88, 90) are imbricated within one another and are, in the rest position, coplanar overall.

13. Control device (12) according to claim 12, **characterized in that** the articulation surface (104) of the first fork (88) is intended to cooperate with at least one internal articulation surface (S) complementary to the first articulation means (106, 206) and **in that** the first and the second articulation surfaces (120A, 120B) of the second fork (90) are intended to cooperate respectively with the first articulation surface (S1) and the second articulation surface (S2) complementary to the second articulation means (122).
